(19) **Europäisches Patentamt**
**European Patent Office**
**Office européen des brevets**

(11) **EP 3 788 323 B1**

(12) **EUROPÄISCHE PATENTSCHRIFT**

(45) Veröffentlichungstag und Bekanntmachung des Hinweises auf die Patenterteilung:
**26.10.2022 Patentblatt 2022/43**

(21) Anmeldenummer: **19718124.1**

(22) Anmeldetag: **11.04.2019**

(51) Internationale Patentklassifikation (IPC):
**G01F 1/00** *(2022.01)* **G01F 1/325** *(2022.01)*
**G01F 15/00** *(2006.01)*

(52) Gemeinsame Patentklassifikation (CPC):
**G01F 1/00; G01F 1/3287; G01F 15/00**

(86) Internationale Anmeldenummer:
**PCT/EP2019/059253**

(87) Internationale Veröffentlichungsnummer:
**WO 2019/211074 (07.11.2019 Gazette 2019/45)**

(54) **MESSSYSTEM SOWIE VERFAHREN ZUM MESSEN EINER MESSGRÖSSE EINES STRÖMENDEN FLUIDS**

MEASURING SYSTEM AND METHOD FOR MEASURING A MEASUREMENT VARIABLE OF A FLOWING FLUID

SYSTÈME DE MESURE AINSI QUE PROCÉDÉ DE MESURE D'UNE GRANDEUR DE MESURE D'UN FLUIDE EN ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2018 DE 102018110456**

(43) Veröffentlichungstag der Anmeldung:
**10.03.2021 Patentblatt 2021/10**

(73) Patentinhaber: **Endress + Hauser Flowtec AG 4153 Reinach (CH)**

(72) Erfinder: **KIRST, Michael 79539 Lörrach (DE)**

(74) Vertreter: **Hahn, Christian et al
Endress+Hauser Group Services
(Deutschland)AG +Co. KG
Colmarer Straße 6
79576 Weil am Rhein (DE)**

(56) Entgegenhaltungen:
EP-A1- 3 309 521 WO-A1-90/04230
WO-A1-2018/016984 US-A1- 2012 192 657

• Anonymous: "Z-Transformation - Wikipedia", , 26 April 2018 (2018-04-26), XP055856290, Retrieved from the Internet: URL:https://de.wikipedia.org/w/index.php?title=Z-Transformation&oldid=176877774 [retrieved on 2021-10-29]

**Beschreibung**

Die Erfindung betrifft ein Meßsystem bzw. ein Verfahren zum Messen wenigstens einer zeitlich veränderlichen Meßgröße, beispielsweise nämlich einer Strömungsgeschwindigkeit, einer Volumendurchflußrate, eines Drucks, einer Druckdifferenz, oder einer Dichte, eines entlang eines Strömungspfades mit einer vorgegebenen Strömungsrichtung strömenden Fluids.

In der Prozeß-Meß- und Automatisierungstechnik werden für die Messung zum Messen zeitlich veränderlicher Meßgrößen, beispielsweise einer Strömungsgeschwindigkeit, einer Volumendurchflußrate, eines Drucks oder einer Dichte, von entlang eines, beispielsweise mittels einer Rohrleitung gebildeten, Strömungspfades mit einer vorgegebenen Strömungsrichtung strömenden Fluiden oftmals als Vortex-Durchflußmeßgeräte oder als Differenzdruck-Durchflußmeßgeräte ausgebildete Meßsysteme verwendet. Beispiele für solche Meßsysteme sind u.a. aus der JP-A 0682281, der US-A 2007/0084298, der US-A 2011/0247423, der US-A 2017/0328750, der WO-A 00/34744, der WO-A 2008/061551, der WO-A 2009/012230, der WO-A 2009/089438, der WO-A 2009/158605, der WO-A 2010/128289, der WO-A 2012/118690, der WO-A 2013/174956, der WO-A 2013/180843, der WO-A 2014/149203, der WO-A 2015/049488, der WO-A 2016/053492, der WO-A 2017/049782, der WO-A 2018/016984, der WO-A 95/08758, der WO-A 98/50761 oder den nicht vorveröffentlichen deutschen Patentanmeldungen DE102017012067.6 bzw. DE102017012066.8 bekannt.

Die US 2012/192657 A1 offenbart ein Meßsystem zum Messen eines Durchflusses durch ein Messrohr mit einem Strömungshindernis sowie mit jeweils einem Sensor in Strömungsrichtung vor und hinter dem Strömungshindernis.

Derartige Meßsysteme weisen typischerweise jeweils einen dem Erfassen von Druckschwankungen im strömenden Fluid, beispielsweise nämlich zum Erfassen von Druckschwankungen in einer im strömenden Fluid ausgebildeten Kármánschen Wirbelstrasse, und/oder dem Erfassen eines im strömenden Fluid auftretenden Druckabfalls dienlichen Meßwandler sowie eine damit elektrisch gekoppelte Umformer-Elektronik auf, die dafür eingerichtet ist, mittels des Meßwandlers generierte Sensorsignale zu empfangen und zu verarbeiten, insb. nämlich den wenigstens einen Strömungsparameter repräsentierende Meßwerte zu generieren. Nämlicher Meßwandler wiederum ist mittels eines in den Verlauf einer jeweiligen - beispielsweise auch als Anlagenkomponente eines Wärmeversorgungsnetzes oder eines Turbinenkreislaufes ausgebildeten - Rohrleitung eingesetztes und Teilbereiche des Strömungspfades bildendes, gleichwohl dem Führen des jeweils zu messenden Fluids dienliches - beispielsweise monolithisches oder aus Einzelteilen zusammengesetztes - Rohranordnung sowie daran entsprechend angebrachten Sensoranordnungen gebildet. Das Rohanordnung weist jeweils eine - zumeist metallische - Rohrwand, ein davon umschlossenes, gleichwohl einen ersten Teilbereich des Strömungspfades, einen in Strömungsrichtung stromabwärts des ersten Teilbereichs verorteten zweiten Teilbereich des Strömungspfades sowie einen in Strömungsrichtung stromabwärts des zweiten Teilbereichs verorteten dritten Teilbereich des Strömungspfades bildendes Lumen sowie ein zumindest teilweise in nämlichem Lumen angeordneten - beispielsweise auch an einer dem Lumen zugewandten Innenseite der Rohrwand damit fest verbundenen -, mithin im Betrieb von Fluid um- bzw. durchströmten, Strömungshindernis auf. Das Strömungshindernis dient im besonderen dazu, eine erwünschte, beispielsweise nämlich von der wenigstens einen Meßgröße abhängige bzw. als ein von der wenigstens einen Meßgröße abhängiger Meßeffekt dienliche Störung im strömenden Fluid zu bewirken.

Bei den in der JP-A 0682281 oder der WO-A 2018/016984 jeweils gezeigten Meßwandlern bzw. den damit gebildeten Meßsystemen ist das Strömungshindernis als ein im prismatisch geformter Staukörper ausgebildet bzw. ist das Strömungshindernis jeweils dafür eingerichtet, im daran vorbei strömenden Fluid Wirbel mit einer von der Strömungsgeschwindigkeit nämlichen Fluids abhängigen Ablöserate ($1/f_{Vtx}$) zu induzieren, derart, daß im stromabwärts des Strömungshindernisses strömendem Fluid eine Kármánsche Wirbelstraße ausgebildet wird. Alternativ kann das Strömungshindernis, wie u.a. auch in der US-A 2017/0328750, der US-A 2007/0084298, der WO-A 2005/033634, der WO-A 2008/061551, der WO-A 2009/158605, der WO-A 2013/180843 oder der WO-A 2015/049488 gezeigt, beispielsweise auch dafür eingerichtet sein, eine Strömungsgeschwindigkeit eines vorbei- und/oder hindurchströmenden Fluids zu erhöhen und/oder einen in einem vorbei- und/oder hindurchströmenden Fluids herrschenden statischen Druck zu verringern und/oder entlang einer mittels der ersten und zweiten Teilsegmenten der Rohrwand gebildeten Meßstrecke eine von einem Volumendurchfluß abhängigen Druckdifferenz zu provozieren. Dafür kann der zweite Teilbereich bzw. das Strömungshindernis beispielsweise als eine (überkritische) Düse, ein Konus oder eine Blende, beispielsweise nämlich als eine Normblende, ausgebildet oder, wie in der US-A 2007/0084298 gezeigt, mittels eines zwei oder mehr Rohre sowie einer daran einlaßseitig angeschlossene Leitungsverzweigung und einer auslaßseitig daran angeschlossenen Leitungsvereinigung umfassenden vibronischen Meßwandlers gebildet sein.

Zwecks des Generierens der Sensorsignale umfaßt jeder der vorbezeichneten Meßsysteme ferner jeweils wenigstens zwei - typischerweise baugleiche - Sensoranordnungen, von denen eine erste Sensoranordnung in dem vorbezeichneten, stromaufwärts des Strömungshindernisses verorteten ersten Teilbereich und ein zweites Sensorelement zumindest anteilig in dem vorbezeichneten, stromabwärts des Strömungshindernisses verorteten dritten Teilbereich positioniert ist. Jede der Sensoranordnungen ist jeweils eingerichtet, jeweils wenigstens ein - typischerweise elektrisches - Sensorsignal zu erzeugen, das ein vom innerhalb des jeweiligen Teilbereichs strömenden Fluid beeinflußtes Frequenzspektrum aufweist; dies im besonderen in der Weise, daß zumindest das Frequenzspektrum des von der zweiten Sensoranordnung gelieferten Sensorsignals wenigstens eine Nutzkomponente, nämlich eine hinsichtlich wenigstens eines Signalparameters von der wenigstens einen Meßgröße beeinflußte spektrale Signalkomponente enthält. Bei dem in der JP-A 0682281, WO-A 2018/016984 WO-A 2009/158605 jeweils gezeigten Meßsystem dient die vorbezeichnete zweite Sensoranordnung jeweils im besonderen dazu, Druckschwankungen in der im strömenden Fluid ausgebildeten *Kármánschen* Wirbelstrasse zu erfassen und in ein die Druckschwankungen repräsentierendes Sensorsignal zu wandeln, dessen Nutzkomponente mit einem innerhalb des Fluids herrschenden, infolge gegenläufiger Wirbel stromab des Staukörpers periodischen Schwankungen unterworfenen Druck korrespondiert bzw. eine mit der Ablöserate der Wirbel korrespondierende Signalfrequenz (~ $f_{Vtx}$) aufweist. Sowohl aufgrund des Meßprinzips als auch aufgrund von allfälligen Störungen können bei Meßsystemen der vorbezeichneten Art die Sensorsignale, insb. aber auch das die eigentliche Nutzkomponente enthaltende zweite Sensorsignal, naturgemäß multispektral und zudem vergleichsweise breitbandig ausgebildet sein; dies im besonderen auch derart, daß das zweite Sensorsignal innerhalb eines die Nutzkomponente erwartungsgemäß enthaltenden Frequenzintervalls weitere signifikante bzw. höhere Signalpegel als die Nutzkomponente aufweisende spektrale Signalkomponenten enthält.

Zum Verarbeiten der wenigstens zwei Sensorsignale, insb. nämlich zu deren Digitalisierung und zur wiederkehrenden Berechnung von die Meßgröße repräsentierenden Meßwerten, beispielsweise anhand von aus den wenigstens zwei Sensorsignalen gewonnenen digitalen Abtastfolgen, umfaßt jedes der vorbezeichneten Meßsysteme ferner eine, beispielsweise auch mittels wenigstens eines Mikroprozessors gebildete, Umformer-Elektronik. Die Umformer-Elektronik ist typischerweise in einem robusten, zumeist auch schlag-, druck-, und/oder explosionsfesten bzw. hermetisch dichten, Elektronik-Gehäuse untergebracht, das beispielsweise unter Bildung eines vorkonfektionierten Meßsystems in Kompaktbauweise direkt an der jeweiligen Rohranordnung angebracht sein kann. Zudem kann die Meßelektronk, beispielswiese über entsprechende elektrische Leitungen und/oder über Funkverbindung, an ein vom jeweiligen Meßsystem räumlich entfernt angeordnetes und zumeist auch räumlich verteiltes übergeordnetes elektronisches Datenverarbeitungssystem, beispielsweis eine speicherprogrammierbare Steuerung (SPS) und/oder ein Prozeßleitsystem (PLS) gekoppelt sein, das zur Steuerung und/oder Überwachung einer die jeweilige Rohrleitung umfassenden Anlage dient und an das die vom jeweiligen Meßsystem, insb. auch in Echtzeit, erzeugten Meßwerte mittels eines diese entsprechend tragenden, beispielsweise auch digitalen, Meßwertesignals jeweils zeitnah weitergegeben werden. Zum Anzeigen der Meßwerte, und ggf. auch anderer Betriebsdaten des Meßsystems, sowie zum Bedienen des Meßsystems vor Ort kann das Meßsystem ferner eine, ggf. auch mit der Umformer-Elektronik kommunizierende Anzeige- und Bedieneinheit vorgesehen sein.

Bei dem in der WO-A 2018/016984 gezeigten Meßsystem wird u.a. vorgeschlagen, die beiden Sensorsignale einer Frequenzanalyse zu unterziehen, beispielsweise mittels einer in der Umformer-Elektronik ausgeführten schnellen Fouriertransformation (FFT), um basierend darauf stromaufwärts des ersten Teilbereichs in die Strömung eingetragene Störungen eliminieren und somit die Nutzkomponente im zweiten Sensorsignal möglichst genau herausfiltern zu können.

Solche Störungen können demnach z.B. mittels einer Pumpe im strömenden Fluid induzierte Druckpulsationen oder aber beispielsweise auch Vibrationen der Rohrleitung sein.

Ein Nachteil einer solchen, auf einer diskreten Fouriertransformation basierenden Frequenzanalyse ist u.a. darin zusehen, daß aufgrund der der diskreten Fouriertransformation immanenten Unschärfe-Relation die Geschwindigkeit, mit der die beiden Sensorsignale jeweils bei gegebener Rechenleistung der Umformer-Elektronik verarbeitet werden können, umso geringer ist, je höher die Frequenzauflösung gewählt ist, mit der die spektralen Komponenten der Sensorsignale erfaßt werden können. Gleichwohl sind bei Meßsystemen der in Rede stehenden Art, nicht zuletzt aufgrund der naturgemäß hohen Dynamik der Meßrgröße, zumeist auch hohe Aktualisierungsgeschwindigkeiten für die jeweiligen Meßwerte angestrebt werden bzw. erforderlich.

Dem Rechnung tragend besteht eine Aufgabe der Erfindung darin, ein Verfahren bzw. ein entsprechendes Meßsystem anzugeben, mit dem Sensorsignale der vorbezeichneten Art schneller und präzisere verarbeitet werden können, derart, daß die mit der Meßgröße korrespondierende Nutzkomponente sehr schnell und sehr genau aus dem jeweiligen Sensorsignal herausgefiltert werden kann.

Zur Lösung der Aufgabe besteht die Erfindung in einem Meßsystem zum Messen wenigstens einer zeitlich veränderlichen Meßgröße, beispielsweise nämlich einer Strömungsgeschwindigkeit, einer Volumendurchflußrate, eines Drucks, einer Druckdifferenz, oder einer Dichte, eines entlang eines Strömungspfades mit einer vorgegebenen Strömungsrichtung strömenden Fluids, welches Meßsystem umfaßt:

eine, beispielsweise in den Verlauf einer Rohrleitung einsetzbare und/oder als Bestandteil einer Rohrleitung ausgebildete, Rohranordnung mit einem einen ersten Teilbereich des Strömungspfades, einen in Strömungsrichtung stromabwärts des ersten Teilbereichs verorteten zweiten Teilbereich des Strömungspfades sowie einen in Strömungsrichtung stromabwärts des zweiten Teilbereichs verorteten dritten Teilbereich des Strömungspfades bildenden Lumen, mit einer nämliches Lumen umhüllenden, beispielsweise metallische und/oder monolithische, Rohrwand und mit einem im zweiten Teilbereich des Strömungspfades innerhalb der Rohranordnung angeordneten, beispielsweise an einer dem Lumen zugewandten Innenseite der Rohrwand damit fest verbundenen, Strömungshindernis zum Bewirken einer - beispielsweise von der wenigstens einen Meßgröße abhängigen und/oder als ein von der wenigstens einen Meßgröße abhängiger Meßeffekt dienlichen - Störung im strömenden Fluid;

eine, beispielsweise zumindest teilweise am ersten Teilbereich und/oder zumindest teilweise innerhalb des ersten Teilbereichs angeordnete, erste Sensoranordnung, die eingerichtet ist, wenigstens ein erstes Sensorsignal zu erzeugen, das ein vom innerhalb des ersten Teilbereichs strömenden Fluid beeinflußtes erstes Frequenzspektrum aufweist;

eine, beispielsweise zumindest teilweise am dritten Teilbereich und/oder zumindest teilweise innerhalb des dritten Teilbereichs angeordneten und/oder zur ersten Sensoranordnung baugleichen, zweite Sensoranordnung, die eingerichtet ist, wenigstens ein zweites Sensorsignal zu erzeugen, das ein vom innerhalb des dritten Teilbereichs strömenden Fluid beeinflußtes - beispielsweise nämlich vom ersten Frequenzspektrum abweichendes und/oder wenigstens eine Nutzkomponente, nämlich eine hinsichtlich wenigstens eines Signalparameters von der wenigstens einen Meßgröße beeinflußte spektrale Signalkomponente enthaltendes - zweites Frequenzspektrum aufweist;

sowie eine, beispielsweise mittels wenigstens eines Mikroprozessors gebildete, Umformer-Elektronik. Die Umformer-Elektronik des erfindungsgemäßen Meßsystems ist im besonderen dafür eingerichtet, sowohl das erste Sensorsignal zu empfangen und in eine nämliches Sensorsignal approximierende erste Sensorsignal-Abtastfolge, nämlich eine Sequenz von zu verschieden, beispielsweise zeitlich äquidistanten, Abtastzeitpunkten, mithin mit einer, beispielsweise konstanten, Abtastrate aus dem ersten Sensorsignal gewonnenen digitalen Abtastwerten zu wandeln, als auch das zweite Sensorsignal zu empfangen und in eine nämliches Sensorsignal approximierende zweite Sensorsignal-Abtastfolge, nämlich einer Sequenz von zu verschieden, beispielsweise zeitlich äquidistanten, Abtastzeitpunkten, mithin mit einer, beispielsweise konstanten, Abtastrate aus dem zweiten Sensorsignal gewonnenen digitalen Abtastwerten zu wandeln, beispielsweise derart, daß die zweite Sensorsignal-Abtastfolge wenigstens eine Nutzkomponente, nämlich eine von der wenigstens einen Meßgröße beeinflußte spektrale Signalkomponente des zweiten Sensorsignals approximiert. Zudem ist die Umformer-Elektronik des erfindungsgemäßen Meßsystems dafür eingerichtet, mittels eines digitalen adaptiven Filters aus der ersten Sensorsignal-Abtastfolge einen Nutzfilterkoeffizienten-Satz, nämlich einen Satz von Filterkoeffizienten zu ermitteln sowie mittels nämlichen Nutzfilterkoeffizienten-Satzes eine z-Übertragungsfunktion eines Nutzsignalfilters, nämlich eines dem Filtern der zweiten Sensorsignal-Abtastfolge dienlichen digitalen Filters zu bilden, derart, daß die z-Übertragungsfunktion des Nutzsignalfilters durch nämlichen Nutzfilterkoeffizienten-Satz bestimmt ist. Darüberhinaus ist die Umformer-Elektronik des erfindungsgemäßen Meßsystems auch dafür eingerichtet, mittels nämlichen Nutzsignalfilters sowie mittels der zweiten Sensorsignal-Abtastfolge eine Nutzsignalfolge, nämlich einer Sequenz von mittels des Nutzsignalfilters aus der zweiten Sensorsignal-Abtastfolge berechneten digitalen Funktionswerten zu erzeugen sowie aus der Nutzsignalfolge eine Meßwertefolge, nämlich einer Sequenz von die wenigstens eine Meßgröße zeitlich aufeinanderfolgend repräsentierenden digitalen Meßwerten zu erzeugen.

Darüberhinaus besteht die Erfindung zudem auch in einem, beispielsweise auch mittels des vorbezeichneten erfindungsgemäßen Meßsystem durchgeführten und/oder dem Einrichten bzw. Inbetriebnehmen nämlichen Meßsystems dienlichen, Verfahren zum Messen wenigstens einer zeitlich veränderlichen Meßgröße, beispielsweise einer Strömungsgeschwindigkeit, einer Volumendurchflußrate, eines Drucks oder einer Dichte, eines entlang eines, beispielsweise mittels einer Rohrleitung oder innerhalb eines Lumens eines Rohrs eines Meßwandlers gebildeten, Strömungspfades mit einer vorgegebenen Strömungsrichtung strömenden Fluids, wobei der Strömungspfad einen ersten Teilbereich, einen in Strömungsrichtung stromabwärts des ersten Teilbereichs verorteten zweiten Teilbereich sowie einen in Strömungsrichtung stromabwärts des zweiten Teilbereichs verorteten dritten Teilbereich aufweist, und wobei innerhalb des zweiten Teilbereichs ein Strömungshindernis zum Bewirken einer - beispielsweise von der wenigstens einen Meßgröße abhängigen und/oder als ein von der wenigstens einen Meßgröße abhängiger Meßeffekt dienlichen und/oder erwünschten - Störung im strömenden Fluid ausgebildet ist, welches Verfahren umfaßt:

Strömenlassen von Fluid entlang des Strömungspfades, derart, daß aufeinanderfolgende Teilvolumen des Fluids jeweils zunächst zum ersten Teilbereich, weiter zum zweiten Teilbereich und weiter zum dritten Teilbereich strömt und daß mittels des innerhalb des zweiten Teilbereichs ausgebildeten Strömungshindernisses eine - beispielsweise von der wenigstens einen Meßgröße abhängige und/oder als ein von der wenigstens einen Meßgröße abhängiger Meßeffekt dienliche - Störung im strömenden Fluid bewirkt wird;

Erzeugen wenigstens eines ersten Sensorsignals, das ein vom innerhalb des ersten Teilbereichs strömenden Fluid beeinflußtes erstes Frequenzspektrum aufweist;

Wandeln des ersten Sensorsignal in eine nämliches Sensorsignal approximierende erste Sensorsignal-Abtastfolge, nämlich eine Sequenz von zu verschieden, beispielsweise zeitlich äquidistanten, Abtastzeitpunkten, mithin mit einer, beispielsweise konstanten, Abtastrate aus dem ersten Sensorsignal gewonnenen digitalen Abtastwerten;

Erzeugen wenigstens eines zweiten Sensorsignals, das ein vom innerhalb des zweiten Teilbereichs und/oder innerhalb des dritten Teilbereichs strömenden Fluid beeinflußtes, beispielsweise nämlich vom ersten Frequenzspektrum abweichendes und/oder wenigstens eine Nutzkomponente, nämlich eine hinsichtlich wenigstens eines Signalparameters von der wenigstens einen Meßgröße bzw. der Störung beeinflußte spektrale Signalkomponente enthaltendes, zweites Frequenzspektrum aufweist;

Wandeln des zweiten Sensorsignals in eine nämliches Sensorsignal approximierende zweite Sensorsignal-Abtastfolge, nämlich einer Sequenz von zu verschieden, beispielsweise zeitlich äquidistanten, Abtastzeitpunkten, mithin mit einer, beispielsweise konstanten, Abtastrate aus dem zweiten Sensorsignal gewonnenen digitalen Abtastwerten, beispielsweise derart, daß die zweite Sensorsignal-Abtastfolge wenigstens eine Nutzkomponente, nämlich eine von der wenigstens einen Meßgröße beeinflußte spektrale Signalkomponente des zweiten Sensorsignals approximiert;

Verwenden der ersten Sensorsignal-Abtastfolge und eines digitalen adaptiven Filters, beispielsweise nämlich eines linearen Vorhersagefilters (LPE - linear prediction filter), zum Ermitteln wenigstens eines Nutzfilterkoeffizienten-Satzes, nämlich eines Satzes von N, beispielsweise nämlich wenigstens fünf ($N \geq 5$) und/oder zumindest teilweise voneinander abweichenden, Filterkoeffizienten aus der ersten Sensorsignal-Abtastfolge;

Verwenden des Nutzfilterkoeffizienten-Satzes zum Bilden einer z-Übertragungsfunktion eines Nutzsignalfilters, nämlich eines dem Filtern der zweiten Sensorsignal-Abtastfolge dienlichen digitalen Filters, derart, daß die z-Übertragungsfunktion des Nutzsignalfilters durch nämlichen Nutzfilterkoeffizienten-Satz bestimmt ist, beispielsweise nämlich eines digitalen Filters mit einer endlichen Impulsantwort;

Verwenden der zweiten Sensorsignal-Abtastfolge und des Nutzsignalfilters zum Erzeugen einer Nutzsignalfolge, nämlich einer Sequenz von mittels des Nutzsignalfilters aus der zweiten Sensorsignal-Abtastfolge berechneten digitalen Funktionswerten; sowie

Erzeugen einer Meßwertefolge, nämlich einer Sequenz von die wenigstens eine Meßgröße zeitlich aufeinanderfolgend repräsentierenden digitalen Meßwerten, aus der Nutzsignalfolge.

Nach einer ersten Ausgestaltung des Meßsystems der Erfindung ist die Umformer-Elektronik eingerichtet, die Filterkoeffizienten $w_k$ des Nutzfilterkoeffizienten-Satzes W mittels eines LMS-Algorithmus und/oder mittels eines RMS-Algorithmus zu ermitteln.

Nach einer zweiten Ausgestaltung des Meßsystems der Erfindung ist ferner vorgesehen, daß die Umformer-Elektronik einen, beispielsweise nicht-flüchtigen, Speicher aufweist, der dafür eingerichtet ist, zumindest die Filterkoeffizienten des Nutzfilterkoeffizienten-Satzes zu speichern.

Nach einer dritten Ausgestaltung des Meßsystems der Erfindung ist die Umformer-Elektronik eingerichtet, einen Transversalfilterkoeffizienten-Satz, nämlich einen Satz von eine z-Übertragungsfunktio eines Transversalfilters des digitale adaptive Filters bestimmenden Filterkoeffizienten, beispielsweise auch wiederkehrend, zu berechnen.

Nach einer vierten Ausgestaltung des Meßsystems der Erfindung ist die Umformer-Elektronik eingerichtet, den Nutzfilterkoeffizienten-Satz für das Nutzsignalfilteraus dem Transversalfilterkoeffizienten-Satz des Transversalfilters zu ermitteln, insb. nämlich den Transversalfilterkoeffizienten-Satz in den Nutzfilterkoeffizienten-Satze zu übernehmen.

Nach einer fünften Ausgestaltung des Meßsystems der Erfindung ist ferner vorgesehen, daß das digitale adaptive Filter eingerichtet ist, aus der ersten Sensorsignal-Abtastfolge eine Schätzsignalfolge, nämlich einer Sequenz von, beispielsweise mittels eines digitalen Transversalfilters, aus der ersten Sensorsignal-Abtastfolge berechneten digitalen Funktionswerte zu generieren, beispielsweise derart, daß die Schätzsignalfolge zumindest zeitweise gleich oder zumindest näherungsweise gleich der Sensorsignal-Abtastfolge ist bzw. einen minimalen quadratischen Fehler zur Sensorsignal-Abtastfolge aufweist.

Nach einer sechsten Ausgestaltung des Meßsystems der Erfindung ist die Umformer-Elektronik eingerichtet, anhand der Nutzsignalfolge eine Frequenz der Nutzkomponente zu ermitteln.

Nach einer siebenten Ausgestaltung des Meßsystems der Erfindung ist ferner vorgesehen, daß die Umformer-Elektronik eingerichtet ist, anhand einer, beispielsweise nämlich aus der der Nutzsignalfolge gewonnenen, Frequenz der Nutzkomponente eine Strömungsgeschwindigkeit und/oder eine Volumendurchflußrate des Fluids zu ermitteln.

Nach einer achten Ausgestaltung des Meßsystems der Erfindung ist ferner vorgesehen, daß der zweite Teilbereich bzw. das damit gebildete Strömungshindernis eingerichtet ist, eine Strömungsgeschwindigkeit eines vorbei- und/oder hindurchströmenden Fluids zu erhöhen und/oder einen in einem vorbei- und/oder hindurchströmenden Fluids herrschenden statischen Druck zu verringern und/oder entlang einer mittels der ersten, zweiten und dritten Teilbereiche gebildeten Meßstrecke eine von einem Volumendurchfluß abhängigen Druckdifferenz zu provozieren.

Nach einer neunten Ausgestaltung des Meßsystems der Erfindung ist ferner vorgesehen, daß der zweite Teilbereich bzw. das damit gebildete Strömungshindernis dafür eingerichtet ist, im daran vorbeiströmenden Fluid Wirbel zu induzieren, beispielsweise derart, daß im stromabwärts des Strömungshindernisses strömenden Fluid eine *Kármánsche* Wirbelstraße ausgebildet wird.

Nach einer zehnten Ausgestaltung des Meßsystems der Erfindung ist ferner vorgesehen, daß das Strömungshindernis mittels einer Blende, beispielsweise nämlich als eine Normblende, gebildet ist.

Nach einer elften Ausgestaltung des Meßsystems der Erfindung ist ferner vorgesehen, daß das Strömungshindernis mittels eines, beispielsweise prismatisch geformten, Staukörpers gebildet ist.

Nach einer zwölften Ausgestaltung des Meßsystems der Erfindung ist ferner vorgesehen, daß das Strömungshindernis mittels einer, beispielsweise überkritischen, Düse gebildet ist.

Nach einer dreizehnten Ausgestaltung des Meßsystems der Erfindung ist ferner vorgesehen, daß die erste Sensoranordnung mittels eines, beispielsweise lediglich, am ersten Teilbereich positionierten, beispielsweise kapazitiven, Drucksensors gebildet ist.

Nach einer vierzehnten Ausgestaltung des Meßsystems der Erfindung ist ferner vorgesehen, daß die zweite Sensoranordnung mittels eines zumindest teilweise am dritten Teilbereich positionierten, beispielsweise kapazitiven, Drucksensors gebildet ist.

Nach einer fünfzehnten Ausgestaltung des Meßsystems der Erfindung ist ferner vorgesehen, daß die erste Sensoranordnung mittels eines, beispielsweise lediglich, am ersten Teilbereich positionierten, beispielsweise kapazitiven und/oder induktiven, Mikrofons, beispielsweise einem dynamischen Mikrofon, einem Piezomikrofon oder einem Hochfrequenz-Kondensatormikrofon, gebildet ist.

Nach einer sechzehnten Ausgestaltung des Meßsystems der Erfindung ist ferner vorgesehen, daß die zweite Sensoranordnung mittels eines zumindest teilweise am dritten Teilbereich positionierten, beispielsweise kapazitiven und/oder induktiven, Mikrofons, beispielsweise einem dynamischen Mikrofon, einem Piezomikrofon oder einem Hochfrequenz-Kondensatormikrofon, gebildet ist.

Nach einer siebzehnten Ausgestaltung des Meßsystems der Erfindung ist ferner vorgesehen, daß die zweite Sensoranordnung mittels eines in den dritten Teilbereich hineinragenden Sensorpaddels gebildet ist.

Nach einer achtzehnten Ausgestaltung des Meßsystems der Erfindung ist ferner vorgesehen, daß die erste Sensoranordnung mittels zweier jeweils, beispielsweise lediglich, am ersten Teilbereich positionierten Ultraschallwandler gebildet ist.

Nach einer neunzehnten Ausgestaltung des Meßsystems der Erfindung ist ferner vorgesehen, daß die zweite Sensoranordnung mittels zweier jeweils zumindest teilwiese am dritten Teilbereich positionierten Ultraschallwandler gebildet ist.

Nach einer zwanzigsten Ausgestaltung des Meßsystems der Erfindung ist ferner vorgesehen, daß der zweite Teilbereich einen, beispielsweise prismatisch geformten, Staukörper aufweist

Nach einer einundzwanzigsten Ausgestaltung des Meßsystems der Erfindung ist ferner vorgesehen, daß der zweite Teilbereich eine Blende, beispielsweise eine Normblende, aufweist.

Nach einer zweiundzwanzigsten Ausgestaltung des Meßsystems der Erfindung ist ferner vorgesehen, daß zumindest der zweite Teilbereich mittels eines, beispielsweise zwei oder mehr Rohre und/oder eine Leitungsverzweigung und/oder eine Leitungsvereinigung umfassenden, vibronischen Meßwandlers gebildet ist.

Nach einer dreiundzwanzigsten Ausgestaltung des Meßsystems der Erfindung ist ferner vorgesehen, daß ein kleinster Abstand zwischen dem ersten und dritten Teilbereich mehr als ein 3-faches eines kleinsten Kalibers der Rohranordnung beträgt.

Nach einer vierundzwanzigsten Ausgestaltung des Meßsystems der Erfindung ist ferner vorgesehen, daß ein kleinster Abstand zwischen dem ersten und dritten Teilbereich weniger als ein 10-faches eines größten Kalibers der Rohranordnung beträgt.

Nach einer fünfundzwanzigsten Ausgestaltung des Meßsystems der Erfindung ist ferner vorgesehen, daß die Umformer-Elektronik sowohl mit der ersten Sensoranordnung als auch mit der zweiten Sensoranordnung elektrisch verbunden ist.

Nach einer ersten Ausgestaltung des Verfahrens der Erfindung ist ferner vorgesehen, daß die Filterkoeffizienten $w_k$ des Nutzfilterkoeffizienten-Satzes mittels eines LMS-Algorithmus *(Least-Mean-Squares-Algorithmus)* und/oder mittels eines RMS-Algorithmus (*Recursive-Least-Squares-Algorithmus*) ermittelt werden.

Nach einer zweiten Ausgestaltung des Verfahrens der Erfindung ist ferner vorgesehen, daß der Nutzfilterkoeffizienten-Satz bzw. das damit gebildete Nutzsignalfilter fünf oder mehr (N $\geq$ 5), beispielsweise mehr als 10 (N > 10), Filterkoeffizienten enthält.

Nach einer dritten Ausgestaltung des Verfahrens der Erfindung ist ferner vorgesehen, daß die Abtastrate der ersten Sensorsignal-Abtastfolge und die Abtastrate der zweiten Sensorsignal-Abtastfolge gleich groß sind.

Nach einer vierten Ausgestaltung des Verfahrens der Erfindung ist ferner vorgesehen, daß das digitale adaptive Filter ein Transversalfilter, nämlich ein digitales Filter mit einer durch einen Transversalfilterkoeffizienten-Satz, nämlich einen Satz von M Filterkoeffizienten bestimmten z-Übertragungsfunktion umfaßt, beispielsweise nämlich ein digitales Filter mit einer endlichen Impulsantwort. Diese Ausgestaltung des erfindungsgemäßen Verfahrens weiterbildend umfaßt dieses weiters: ein Ermitteln des Nutzfilterkoeffizienten-Satzes für das Nutzsignalfilter aus dem Transversalfilterkoeffizienten-Satz des Transversalfilter, beispielsweise derart, daß der Nutzfilterkoeffizienten-Satz alle Filterkoeffizienten des Transversalfilterkoeffizienten-Satzes enthält, und/oder ein Verwenden des Transversalfilters sowie der ersten Sensorsignal-Abtastfolge zum Erzeugen einer Schätzsignalfolge, nämlich einer Sequenz von mittels des digitalen Transversalfilters aus der ersten Sensorsignal-Abtastfolge berechneten digitalen Funktionswerten. Der Transversalfilterkoeffizienten-Satz kann beispielsweise derart ermittelt werden, daß die Schätzsignalfolge die erste Sensorsignal-Abtastfolge approximiert bzw. prognostiziert, nämlich gleich oder zumindest näherungsweise gleich der ersten Sensorsignal-Abtastfolge ist und/oder einen minimalen quadratischen Fehler *(BLUP - Best Linear Unbiased Prediction)* zur ersten Sensorsignal-Abtastfolge aufweist. Zudem kann der Nutzfilterkoeffizienten-Satz für das Nutzsignalfilter aus dem Transversalfilterkoeffizienten-Satz des Transversalfilter beispielsweise dann, ggf. auch nur dann, ermittelt werden, falls die Schätzsignalfolge für ein vorgegebenes Abtast- bzw. Zeitintervall gleich oder zumindest näherungsweise gleich der ersten Sensorsignal-Abtastfolge ist, beispielsweise nämlich einen minimalen quadratischen Fehler *(BLUP - Best Linear Unbiased Prediction)* zur ersten Sensorsignal-Abtastfolge aufweist.

Nach einer fünften Ausgestaltung des Verfahrens der Erfindung ist ferner vorgesehen, daß das digitale adaptive Filter ein Transversalfilter, nämlich ein digitales Filter mit einer durch einen Transversalfilterkoeffizienten-Satz, nämlich einen Satz von M Filterkoeffizienten bestimmten z-Übertragungsfunktion umfaßt, beispielsweise nämlich ein digitales Filter mit einer endlichen Impulsantwort, und daß der Nutzfilterkoeffizienten-Satz sämtliche Filterkoeffizienten des Transversalfilterkoeffizienten-Satzes enthält, beispielsweise auch derart, daß jeder Filterkoeffizient des Transversalfilterkoeffizienten-Satzes als Filterkoeffizient des Nutzfilterkoeffizienten-Satzes übernommen wird, und/oder daß der Nutzfilterkoeffizienten-Satz bzw. das damit gebildete Nutzsignalfilter einen von Null verschiedenen, beispielsweise auch negativen und/oder vorgegebenen, Filterkoeffizienten enthält, den der Transversalfilterkoeffizienten-Satz bzw. das damit gebildete Transversalfilternicht enthält

Nach einer sechsten Ausgestaltung des Verfahrens der Erfindung ist ferner vorgesehen, daß das digitale adaptive Filter ein Transversalfilter, nämlich ein digitales Filter mit einer durch einen Transversalfilterkoeffizienten-Satz, nämlich einen Satz von M Filterkoeffizienten bestimmten z-Übertragungsfunktion umfaßt, beispielsweise nämlich ein digitales Filter mit einer endlichen Impulsantwort, und daß der Transversalfilterkoeffizienten-Satz W1 bzw. das damit gebildete Transversalfilter fünf oder mehr, beispielsweise auch mehr als 10, Filterkoeffizienten enthält.

Nach einer siebenten Ausgestaltung des Verfahrens der Erfindung ist ferner vorgesehen, daß das digitale adaptive Filter ein Transversalfilter, nämlich ein digitales Filter mit einer durch einen Transversalfilterkoeffizienten-Satz, nämlich einen Satz von M Filterkoeffizienten bestimmten z-Übertragungsfunktion umfaßt, beispielsweise nämlich ein digitales Filter mit einer endlichen Impulsantwort, und daß die Filterkoeffizienten des Transversalfilterkoeffizienten-Satzes mittels eines LMS-Algorithmus *(Least-Mean-Squares-Algorithmus)* und/oder mittels eines RMS-Algorithmus (*Recursive-Least-Squares-Algorithmus*) ermittelt werden.

Nach einer achten Ausgestaltung des Verfahrens der Erfindung ist ferner vorgesehen, daß das zweite Sensorsignal wenigstens eine Nutzkomponente, nämlich eine hinsichtlich wenigstens eines Signalparameters, beispielsweise nämlich einer Amplitude, einer Frequenz oder eines Phasenwinkels, von der wenigstens einen Meßgröße beeinflußte spektrale Signalkomponente enthält. Diese Ausgestaltung des erfindungsgemäßen Verfahrens weiterbildend ist ferner vorgesehen, daß auch die zweite Sensorsignal-Abtastfolge die wenigstens eine Nutzkomponente enthält bzw. approximiert, beispielsweise nämlich auch die Nutzsignalfolge zumindest die Nutzkomponente enthält bzw. approximiert.

Nach einer neunten Ausgestaltung des Verfahrens der Erfindung ist ferner vorgesehen, daß wenigstens zwei der Filterkoeffizienten $w_k$ des Nutzfilterkoeffizienten-Satzes W voneinander abweichen; und/oder

Nach einer zehnten Ausgestaltung des Verfahrens der Erfindung ist ferner vorgesehen, daß das Bewirken der Störung im durch den zweiten Teilbereich strömenden Fluid ein Erhöhen einer Strömungsgeschwindigkeit des innerhalb des zweiten Teilbereichs strömenden Fluid umfaßt.

Nach einer elften Ausgestaltung des Verfahrens der Erfindung ist ferner vorgesehen, daß das Bewirken der Störung im durch den zweiten Teilbereich strömenden Fluid ein Verringern eines im innerhalb des zweiten Teilbereichs strömenden Fluids herrschenden statischen Drucks umfaßt.

Nach einer zwölften Ausgestaltung des Verfahrens der Erfindung ist ferner vorgesehen, daß das Bewirken der Störung im durch den zweiten Teilbereich strömenden Fluid ein Provozieren eines von einem Volumendurchfluß abhängigen Druckgradienten innerhalb des entlang des Strömungspfades strömenden Fluid umfaßt.

Nach einer dreizehnten Ausgestaltung des Verfahrens der Erfindung ist ferner vorgesehen, daß das Bewirken der Störung im durch den zweiten Teilbereich strömenden Fluid ein Induzieren von Wirbeln im innerhalb des zweiten Teilbereichs strömenden Fluids, beispielsweise nämlich Ausbilden einer Kármánsche Wirbelstraße im stromabwärts des Strömungshindernisses strömenden Fluid, umfaßt.

Nach einer vierzehnten Ausgestaltung des Verfahrens der Erfindung ist ferner vorgesehen, daß die erste Sensoranordnung mittels eines am ersten Teilbereich positionierten Drucksensors gebildet ist.

Nach einer fünfzehnten Ausgestaltung des Verfahrens der Erfindung ist ferner vorgesehen, daß die zweite Sensoranordnung mittels eines am zweiten und/oder dritten Teilbereich positionierten Drucksensors gebildet ist.

Nach einer sechzehnten Ausgestaltung des Verfahrens der Erfindung ist ferner vorgesehen, daß die zweite Sensoranordnung mittels eines in den dritten Teilbereich hineinragenden Sensorpaddels gebildet ist.

Nach einer siebzehnten Ausgestaltung des Verfahrens der Erfindung ist ferner vorgesehen, daß die erste Sensoranordnung mittels wenigstens eines am ersten Teilbereich positionierten Schallwandlers, insb. eines Ultraschallwandlers, gebildet ist.

Nach einer achtzehnten Ausgestaltung des Verfahrens der Erfindung ist ferner vorgesehen, daß die zweite Sensoranordnung mittels wenigstens eines am zweiten und/oder dritten Teilbereich positionierten Schallwandlers, insb. eines Ultraschallwandlers, gebildet ist.

Nach einer neunzehnten Ausgestaltung des Verfahrens der Erfindung ist ferner vorgesehen, daß der zweite Teilbereich einen Staukörper aufweist.

Nach einer zwanzigsten Ausgestaltung des Verfahrens der Erfindung ist ferner vorgesehen, daß der zweite Teilbereich eine Blende, insb. eine Normblende, aufweist.

Nach einer einundzwanzigsten Ausgestaltung des Verfahrens der Erfindung ist ferner vorgesehen, daß der zweite Teilbereich mittels einer, insb. zwei oder mehr Rohre und/oder eine Leitungsverzweigung und/oder eine Leitungsvereinigung umfassenden, Rohranordnung eines vibronischen Meßwandlers gebildet ist.

Nach einer ersten Weiterbildung des Verfahrens der Erfindung umfaßt dieses weiters: ein, beispielsweise auch wiederkehrendes und/oder zyklisches, Ersetzen eines die z-Übertragungsfunktion des Nutzsignalfilters zunächst bestimmenden, beispielsweise auch aus der ersten Sensorsignal-Abtastfolge zuvor ermittelten und/oder vom Nutzfilterkoeffizienten-Satz abweichenden, Nutzfilterkoeffizienten-Satzes durch den Nutzfilterkoeffizienten-Satz. Nämliches Ersetzen des die z-Übertragungsfunktion des Nutzsignalfilters zunächst bestimmenden Nutzfilterkoeffizienten-Satzes durch den Nutzfilterkoeffizienten-Satz kann beispielsweise auch zyklisch mit einer Austauschrate wiederholt wird, beispielsweise auch derart, daß nämliche Austauschrate niedriger ist als die Abtastrate der ersten Sensorsignal-Abtastfolge und/oder niedriger ist als die Abtastrate $f_{s2}$ der zweiten Sensorsignal-Abtastfolge.

Nach einer zweiten Weiterbildung des Verfahrens der Erfindung umfaßt dieses weiters: ein Verwenden einer, beispielsweise zumindest teilweise am ersten Teilbereich und/oder zumindest teilweise innerhalb des ersten Teilbereichs angeordneten, ersten Sensoranordnung zum Erzeugen des ersten Sensorsignals sowie ein Verwenden einer, beispielsweise zumindest teilweise am dritten Teilbereich und/oder zumindest teilweise innerhalb des dritten Teilbereichs angeordneten und/oder zur ersten Sensoranordnung baugleichen, zweiten Sensoranordnung zweiten Erzeugen des zweiten Sensorsignals.

Nach einer dritten Weiterbildung des Verfahrens der Erfindung ist ferner vorgesehen, daß das digitale adaptive Filter ein Transversalfilter, nämlich ein digitales Filter mit einer durch einen Transversalfilterkoeffizienten-Satz, nämlich einen Satz von M Filterkoeffizienten bestimmten z-Übertragungsfunktion umfaßt, beispielsweise nämlich ein digitales Filter mit einer endlichen Impulsantwort. Diese Ausgestaltung des erfindungsgemäßen Verfahrens weiterbildend umfaßt dieses weiters ein Ermitteln des Nutzfilterkoeffizienten-Satzes für das Nutzsignalfilter aus dem Transversalfilterkoeffizienten-Satz des Transversalfilter, beispielsweise derart, daß der Nutzfilterkoeffizienten-Satz alle Filterkoeffizienten des Transversalfilterkoeffizienten-Satzes enthält, und/oder ein Verwenden des Transversalfilters sowie der ersten Sensorsignal-Abtastfolge zum Erzeugen einer Schätzsignalfolge, nämlich einer Sequenz von mittels des digitalen Transversalfilters aus der ersten Sensorsignal-Abtastfolge berechneten digitalen Funktionswerten und umfaßt Verfahren weiters ein Erzeugen einer Schätzfehlerfolge, nämlich einer Sequenz von jeweils eine Abweichung zwischen einem Abtastwert der ersten Sensorsignal-Abtastfolge und einem nämlichen Abtastwert approximierenden Funktionswert der Schätzsignalfolge repräsentierenden digitalen Funktionswerten, beispielsweise nämlich von jeweils eine Differenz zwischen einem Abtastwert der ersten Sensorsignal-Abtastfolge und einem nämlichen Abtastwert approximierenden Funktionswert der Schätzsignalfolge repräsentierenden digitalen Funktionswerten. Zum Erzeugen der Schätzfehlerfolge aus der ersten Sensorsignal-Abtastfolge kann eine durch die z-Übertragungsfunktion des digitalen Transversalfilters, mithin den Transversalfilterkoeffizienten-Satz bestimmte Schätzfehlerfunktion verwendet werden.

Ein Grundgedanke der Erfindung ist es, allfällig von extern, nämlich von außerhalb des Meßsystems in das strömende Fluid eingetragene Störungen mit der einlaßseitig im Meßsystem positionierten Sensoranordnung zunächst direkt, gleichwohl weitgehend isoliert von dem erst stromabwärts davon generierten Meßeffekt erfassen und in ein entsprechendes, nämliche externen Störungen mit enthaltendes erstes Sensorsignal wandeln zu können, um hernach mittels des adaptiven Filters nämliches Sensorsignal einer Signalanalyse zu unterziehen und im Ergebnis der Signalanalyse das Nutzsignalfilter für das dann sowohl die Störung als auch den Meßeffekt enthaltende zweite Sensorsignal passend einzustellen. Ein Vorteil der Erfindung besteht u.a. darin, daß die Signalanalyse "on-the-fly", nämlich als unmittelbares Ergebnis, den zur aktuellen Störung passenden Satz Filterkoeffizienten liefert, wobei die Filterkoeffizienten bereits die am meisten dominierenden spektralen Signalkomponenten des ersten Sensorsignals repräsentieren bzw. in einem für die weitere Messung ausreichendem Maße praktisch einer diskreten spektralen Leistungsdichte (PSD*) der darin enthaltenen Störung entsprechen. Dementsprechend kann die bei einer auf einer klassischen Fouriertransformation basierenden Signalanalyse zusätzlich erforderliche, aufwendige Umrechnung des Ergebnisses der Signalanalyse entfallen. Ein weiterer Vorteil der Erfindung ist auch darin zu sehen, daß die Nachführung des adaptiven Filters, mithin eine Analyse der jeweiligen externen Störung rekursiv erfolgen können. Dementsprechend können auch sowohl ein neuer Satz Filterkoeffizienten als auch ein tatsächlicher Bedarf für eine neuerliche Anpassung des Nutzsignalfilters mittels des vom adaptiven Filter abgeleiteten, neuen Satzes Filterkoeffizienten fortlaufend ermittelt werden.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im Einzelnen zeigen:

Fig. 1, 2, 3   jeweils ein Ausführungsbeispiel für ein erfindungsgemäßes Meßsystem;

Fig. 4   schematisch ein, insb. mittels eines Meßsystems gemäß Fig. 1, 2, 3 durchführbares, Meß- und Auswerteverfahren;

Fig. 5a, 5b   in verschiedenen, teilweise auch geschnittenen, Ansichten eine erste Variante einer zur Bildung eines erfindungsgemäßes Meßsystems geeigneten Rohranordnung;

Fig. 6a, 6b   in verschiedenen, teilweise auch geschnittenen, Ansichten eine zweite Variante einer zur Bildung eines erfindungsgemäßes Meßsystems geeigneten Rohranordnung;

Fig. 7a, 7b   in verschiedenen, teilweise auch geschnittenen, Ansichten eine dritte Variante einer zur Bildung eines erfindungsgemäßes Meßsystems geeigneten Rohranordnung;

Fig. 8   eine vierte Variante einer zur Bildung eines erfindungsgemäßes Meßsystems geeigneten Rohranordnung; und

Fig. 9a, 9b   schematisiert ein Ablaufdiagramm für ein erfindungsgemäßes Verfahren bzw. eine Ausgestaltung davon.

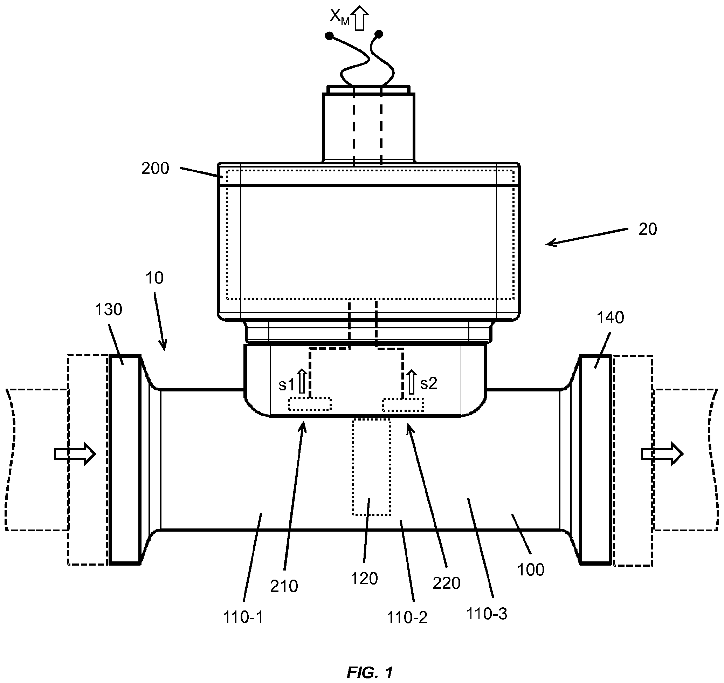

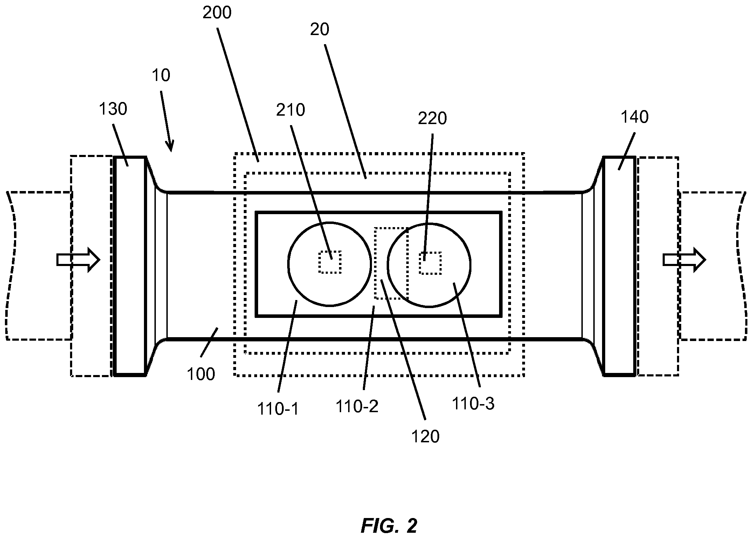

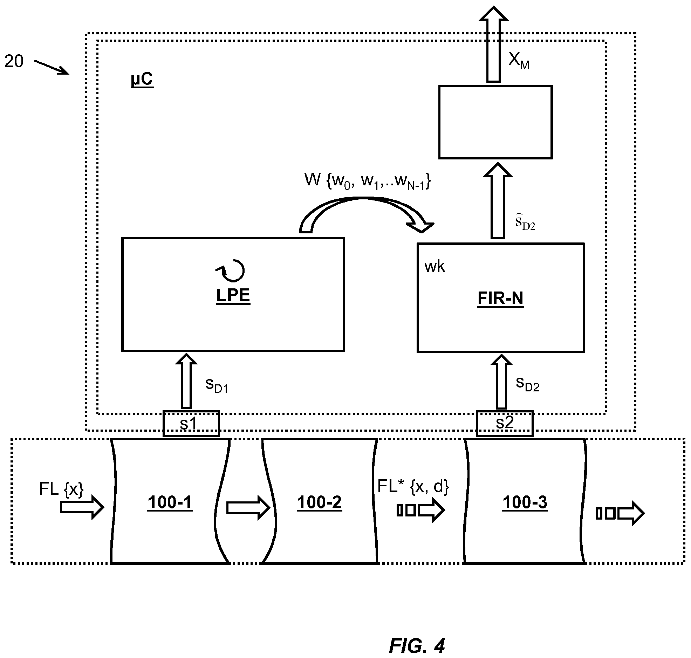

In Fig. 1, 2, 3, 4, 5a, b, 6a, b 7a, b, bzw. 8 ist schematisch jeweils ein Ausführungsbeispiel für ein Meßsystem zum Messen wenigstens einer ggf. auch zeitlich veränderlichen Meßgröße x, insb. eines Drucks, einer Druckdifferenz, einer Temperatur, einer Dichte, eines Strömungsparameters wie z.B. einer Strömungsgeschwindigkeit und/oder einer Volumendurchflußrate, eines entlang eines Strömungspfades mit einer vorgegebenen Strömungsrichtung strömenden Fluids FL bzw. ein entsprechendes Verfahren (Fig. 4) gezeigt. Nämlicher Strömungspfad kann beispielsweise mittels einer Rohrleitung bzw. als Anlagenkomponente einer Abfüllanlage, einer Betankungsanlage, einer chemischen und/oder verfahrenstechnischen Anlage, eines Wärmeversorgungsnetzes, eines Turbinenkreislaufes ausgebildet sein oder beispielsweise auch Komponente einer Erd- oder einer Biogasanlage oder eines Gasversorgungsnetzes sein. Dementsprechend kann das Fluid FL beispielsweise ein Öl, eine wässrige Flüssigkeit, Dampf oder beispielsweise auch ein aus einer Dampfleitung abgeführtes Kondensat oder beispielsweise auch Wasserstoff, Stickstoff, Sauerstoff oder Helium, Methan, Kohlendioxid, Luft, Phosgen bzw. ein ggf. auch komprimiertes Erd- oder Biogas sein.

Das erfindungsgemäße Meßsystem umfaßt dafür wenigstens eine - beispielsweise in den Verlauf der vorbezeichneten Rohrleitung einsetzbares bzw. als Bestandteil derselben ausgebildetes - Rohranordnung 100 mit einem Lumen 100*, mittels dem - wie auch in Fig. 1, 2, 3, 4, 5a, b 6a, b 7a, b, bzw. 8 jeweils angedeutet - einen ersten Teilbereich 100-1 des vorbezeichneten Strömungspfades, einen in Strömungsrichtung stromabwärts des Teilbereichs 100-1 verorteten zweiten Teilbereich 100-2 des Strömungspfades sowie einen in Strömungsrichtung stromabwärts des Teilbereichs 100-2 verorteten dritten Teilbereich 100-3 des Strömungspfades gebildet ist. Zudem weist die Rohranordnung 100 eine nämliches Lumen 100* umschließende, beispielsweise metallische und/oder monolithische, Rohrwand 110 sowie ein im Teilbereich 100-2 des Strömungspfades innerhalb der Rohranordnung angeordneten - beispielsweise nämlich an einer dem Lumen 100* zugewandten Innenseite der Rohrwand damit fest verbundenes und/oder monolithisches - Strömungshindernis 120 zum Bewirken einer (Meßsystem internen) Störung d im strömenden Fluid; dies im besonderen auch in der Weise, daß nämliche Störung d von der wenigstens einen Meßgröße x abhängig ist (d = f{x}) bzw. als ein von der wenigstens einen Meßgröße abhängiger Meßeffekt dienlich sein kann. Die Rohranordnung 100 kann ein einziges Rohr oder mehrere - fluidisch parallel und/oder seriell geschaltete - Rohre aufweisen. Die Rohrwand 110 und das Strömungshindernis 120 können beispielsweise aus dem gleichen Material, beispielsweise nämlich einem, ggf. auch rostfreien Stahl oder einer Nickelbasislegierung, bestehen. Alternativ oder in Ergänzung Rohrwand 110 und Strömungshindernis 120 beispielsweise auch Bestandteile ein und desselben, beispielsweise nämlich gegossenen oder gesinterten, monolithischen Formteils sein. Dadurch kann die Rohrwand in vorteilhafter Weise frei von - zumeist aufwendig herzustellenden und/oder zu prüfenden - Fügestellen gehalten sein bzw. können eigentlich unerwünschte bzw. störende Schweißnähte auf der Innenseite der Rohrwand vermieden werden.

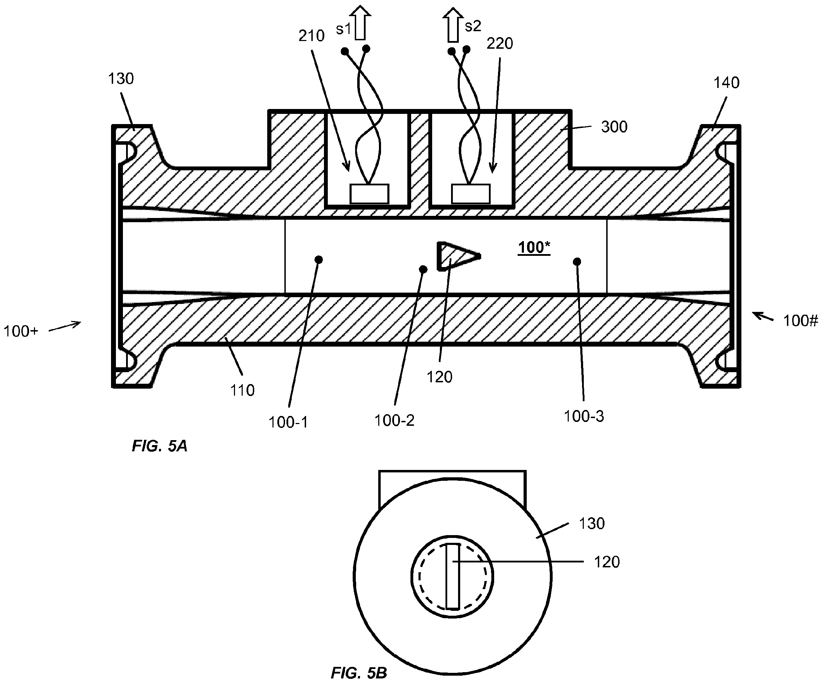

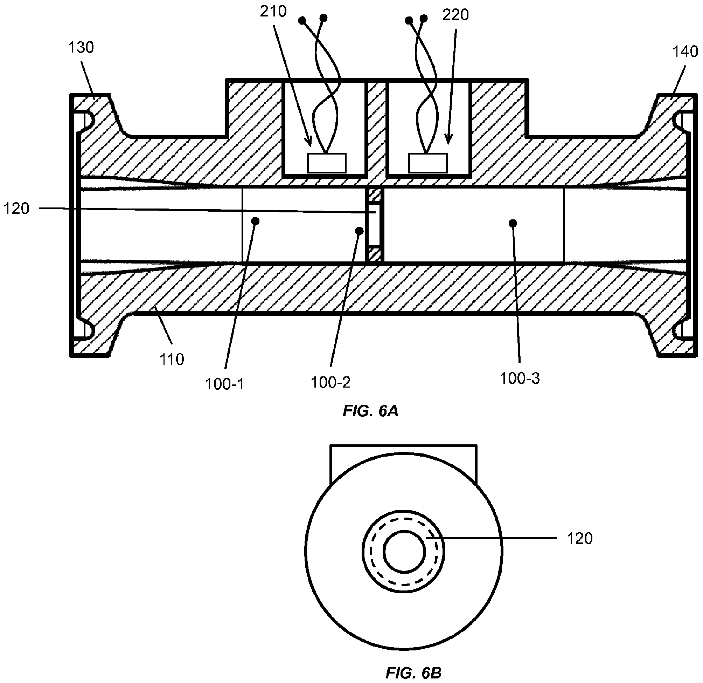

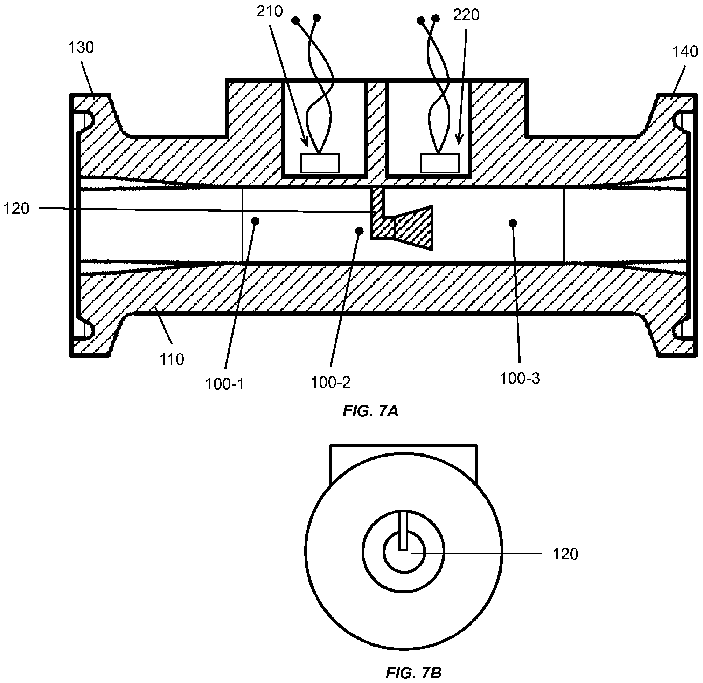

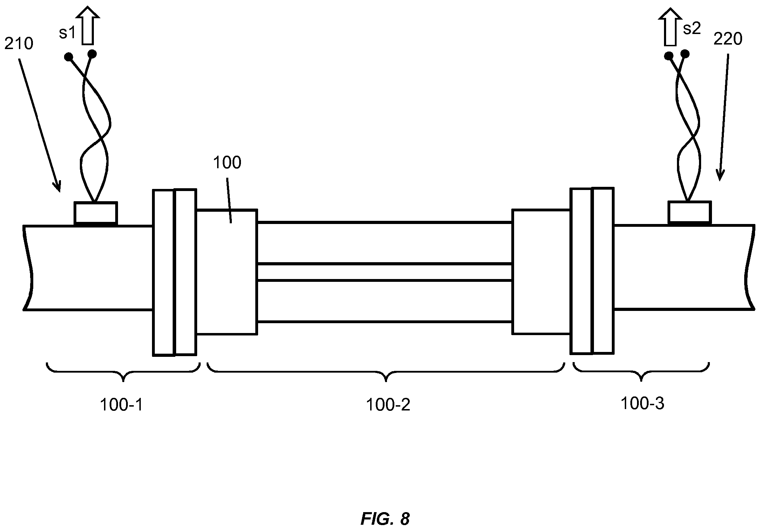

Nach einer weiteren Ausgestaltung der Erfindung ist der Teilbereich 100-2 bzw. das darin gebildete Strömungshindernis 120 eingerichtet, eine Strömungsgeschwindigkeit des hindurch- und/oder vorbeiströmenden Fluids zu erhöhen und/oder einen innerhalb nämlichem Fluids herrschenden statischen Druck zu verringern und/oder entlang einer mittels der Teilbereiche 100-1, 100-2, 100-3 gebildeten Meßstrecke eine von einem Volumendurchfluß abhängige Druckdifferenz und/oder von der Strömungsgeschwindigkeit abhängige Druckschwankungen zu provozieren. Beispielsweise kann der Teilbereich 100-2 bzw. das damit gebildete Strömungshindernis 120 auch dafür eingerichtet sein, im daran vorbeiströmenden Fluid Wirbel zu induzieren, derart, daß im stromabwärts des Strömungshindernisses 120 strömenden Fluid eine Kármánsche Wirbelstraße ausgebildet wird. Das Strömungshindernis 120 kann, wie auch in den Fig. 5a, b, 6a, b 7a, b, bzw. 8 schematisch dargestellt, demnach u.a. auch mittels einer Blende (Fig. 6a, 6b), beispielsweise nämlich einer Normblende, mittels einer, beispielsweise überkritischen, Düse, mittels eines Konus (Fig. 7a, 7b) und/oder eines, beispielsweise prismatisch geformten, Staukörpers (Fig. 5a, 5b) gebildet sein. Nach einer anderen Ausgestaltung der Erfindung ist zumindest der Teilbereich 100-2 mittels eines, beispielsweise zwei oder mehr Rohre und/oder eine Leitungsverzweigung und/oder eine Leitungsvereinigung umfassenden, vibronischen Meßwandlers gebildet. Nämlicher Meßwandler kann beispielsweise aber auch Bestandteil eines Coriolis-Massendurchfluß-Meßgeräts bzw. eines vibronischen Dichte-Meßgeräts (Fig. 8) sein. Nach einer weiteren Ausgestaltung der Erfindung sind die Teilbereiche ferner so ausgebildet und angeordnet, daß, nicht zuletzt um die vorbezeichnete Störung d für die Messung gut ausbilden zu könne, ein kleinster Abstand zwischen dem Teilbereich 100-1 und dem Teilbereich 100-3 mehr als ein 3-faches eines kleinsten Kalibers der Rohranordnung beträgt und/oder daß, beispielsweise um das Meßsystem möglichst kompakt ausbilden zu können, ein kleinster Abstand zwischen dem Teilbereich 100-1 und dem Teilbereich 100-3 weniger als ein 10-faches eines größten Kalibers der Rohranordnung beträgt.

Wie in Fig. 1, 2, 3, 4, 5a, b 6a, b 7a, b, bzw. 8 schematisch jeweils dargestellt bzw. aus einer Zusammenschau nämlicher Figuren ersichtlich, umfaßt das erfindungsgemäße Meßsytem desweiteren eine einlaßseitige erste Sensoranordnung 210, die eingerichtet ist, wenigstens ein, beispielsweise elektrisches oder optisches, erstes Sensorsignal s1 zu erzeugen, das ein vom innerhalb des Teilbereichs 100-1 strömenden Fluid beeinflußtes erstes Frequenzspektrum aufweist, sowie eine auslaßseitige zweite - beispielsweise auch zur Sensoranordnung 210 typ- oder baugleiche - Sensoranordnung 220, die eingerichtet ist, wenigstens ein, beispielsweise elektrisches oder optisches oder zum Sensorsignal s1 typgleiches, zweites Sensorsignal s2 zu erzeugen, das ein vom innerhalb des Teilbereichs 100-3 strömenden Fluid beeinflußtes, insb. nämlich vom vorbezeichneten ersten Frequenzspektrum des Sensorsignals s1 abweichendes, zweites Frequenzspektrum aufweist; dies im besonderen in der Weise, daß das Sensorsignal s2 bzw. dessen Frequenzspektrum wenigstens eine - beispielsweise auch im Sensorsignal s1 so nicht enthaltene - Nutzkomponente $s_N$, nämlich eine hinsichtlich wenigstens eines Signalparameters, beispielsweise einer Amplitude, einer Frequenz oder eines Phasenwinkels, von der wenigstens einen Meßgröße x bzw. der vorbezeichneten Störung d beeinflußte spektrale Signalkomponente enthält. Jedes der Sensorsignale s1, s2 kann beispielsweise jeweils eine mit der Meßgröße x korrespondierende elektrische (Wechsel-)Spannung und/oder jeweils einen mit der Meßgröße x korrespondierende elektrischen (Wechsel-)Strom aufweisen. Im vorbeschriebenen Fall, daß es sich bei der induzierten Störung d um eine *Kármán'sche* Wirbelstraße handelt, kann beispielsweise eine solche spektrale Signalkomponente des Sensorsignals als Nutzkomponente $s_N$ dienen, deren Signalfrequenz mit einer momentanen Ablöserate von nämliche Karman'sche Wirbelstraße bildenden Wirbeln am mittels Staukörpers gebildeten Strömungshindernis 120 korrespondiert.

Wie jeweils in Fig. 1, 2, 3, 4, 5a, b 6a, b 7a, b, bzw. 8 schematisch dargestellt kann die Sensoranordnung 210 dafür zumindest teilweise unmittelbar am Teilbereich 100-1 und/oder zumindest teilweise innerhalb nämlichen Teilbereichs 100-1 angeordnet sein und/oder kann die Sensoranordnung 220 zumindest teilweise unmittelbar am Teilbereich 100-3 und/oder zumindest teilweise innerhalb nämlichen Teilbereichs 100-3 angeordnet sein. Die Sensoranordnung 210 kann beispielsweise mittels eines, ggf. auch lediglich am Teilbereich 100-1 positionierten, konventionellen ersten physikalisch-zu-elektrischen Wandlerelements gebildet sein und die Sensoranordnung 220 kann beispielsweise mittels eines, ggf. auch lediglich am Teilbereich 100-3 positionierten, konventionellen zweiten physikalisch-zu-elektrischen Wandlerelements gebildet sein. Als physikalisch-zu-elektrisches Wandlerelement für die Sensoranordnung 210 bzw. für die Sensoranordnung 220 kann jeweils beispielsweise ein, ggf. auch kapazitiver Drucksensor, ein ggf. auch kapazitives und/oder induktives Mikrofon, beispielsweise auch ein dynamisches Mikrofon, ein Piezomikrofon oder auch ein Hochfrequenz-Kondensatormikrofon, und/oder ein Paar einander diametral gegenüberliegend an der Rohranordnung positionierter Ultraschallwandler dienen. Zumindest für den vorbezeichneten Fall, daß das Strömungshindernis 120 mittels eines prismatischen Staukörpers gebildet ist bzw. mittels des Strömungshindernisses 120 im strömenden Fluid eine Kármán'sche Wirbelstraße ausgebildet wird kann beispielsweise auch ein in den Teilbereich 100-3 hineinragendes Sensorpaddel als physikalisch-zu-elektrisches Wandlerelement für die Sensoranordnung 220 dienen.

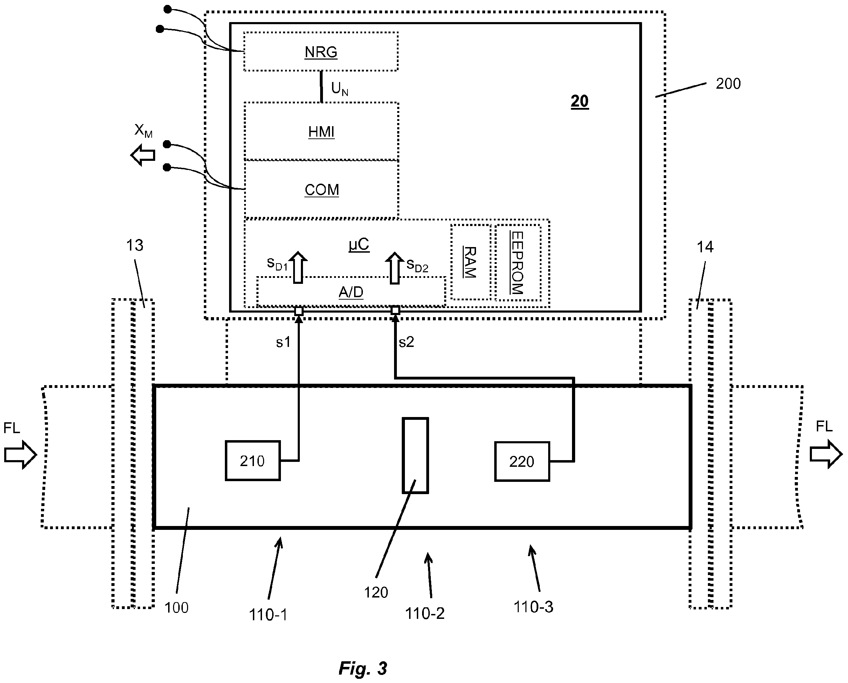

Wie u.a. aus den Fig. 1, 2, 3, 4 ersichtlich, umfaßt das Meßsystem desweiteren, eine - beispielsweise in einem in einem industrietauglichen, robusten, ggf. auch druck- bzw. explosionsfesten, und/oder zumindest gegen Spritzwasser von außen dichten Schutzgehäuse 200 untergebrachte und/oder beispielsweise mittels wenigstens eines Mikroprozessors (µC) gebildete - Umformer-Elektronik 20, die an Sensoranordnungen 210, 220 jeweils elektrisch angeschlossen ist bzw. im Betrieb des Meßsystems zumindest mit nämlichen Sensoranordnungen 210, 220 kommuniziert. Die wenigstens zwei Sensorsignale s1, s2 können, wie in jeweils Fig. 1 bzw. 3 schematisch dargestellt bzw. aus deren Zusammenschau ohne weiters ersichtlich, der Umformer-Elektronik 20, beispielsweise mittels entsprechender Anschlußdrähten, zugeführt sein. Das vorbezeichnete Schutzgehäuse 200 kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein. Das Meßsystem kann, wie auch in Fig. 1 bzw. 3 gezeigt, beispielsweise auch als ein, beispielsweise beim Hersteller, vorkonfektioniertes Meßsystem in Kompaktbauweise, mithin auch als ein eigenständiges Kompakt-Meßgerät, ausgebildet sein, derart, daß das Schutzgehäuse 200 zusammen mit der darin angeordneten Umformer-Elektronik 20 unmittelbar an der Rohranordnung, ggf. auch in unmittelbarere Nähe zu den Sensoranordnungen 210, 220, positioniert und - beispielsweise mittels eines halsförmigen Anschlußstutzens 300 - mit der Rohranordnung starr, ggf. auch wiederlösbar verbunden ist. Demnach kann als Meßsystem beispielsweise auch ein in den Verlauf der Rohrleitung einsetzbares, mithin schlußendlich einen Abschnitt nämlicher Rohrleitung bildendes vorkonfektioniertes Wirbel-Durchflußmeßgerät oder beispielsweise auch ein vorkonfektioniertes Differenzdruck-Durchflußmeßgerät verwendet werden. Das Meßsystem kann somit zumindest hinsichtlich seines mechanischen Aufbaus also beispielsweise auch den aus der eingangs erwähnten JP-A 0682281, US-A 2017/0328750, US-A 2011/0247423, US-A 2007/0084298, WO-A 95/08758, WO-A 00/34744, WO-A 2008/061551, WO-A 2009/158605, WO-A 2013/180843, WO-A 2018/016984 oder den deutschen Patentanmeldungen DE102017012067.6 bzw. DE102017012066.8 entsprechen. Alternativ kann das Schutzgehäuse 200 beispielsweise aber auch von der Rohranordnung entfernt angeordnet und mittels entsprechender Kabelverbindungen mit der Rohranordnung und der daran angebrachten Sensoranordnung verbunden sein.

Die Umformer-Elektronik 20 ist ferner dafür eingerichtet, jedes der Sensorsignale s1, s2 zu empfangen und zu verarbeiten, beispielsweise nämlich die wenigstens Meßgröße x repräsentierende Meßwerte $X_M$ zu generieren, ggf. auch in Echtzeit und/oder in Form von via Feldbus übertragbaren, nämlich jeweils in ein entsprechendes Feldbus-Telegramm gekapselten Digitalwerten. Die mittels der Umformer-Elektronik 20 generierten Meßwerte $X_M$ können beispielsweise vor Ort visualisiert und/oder - drahtgebunden bzw. DIN IEC 60381-1 konform via angeschlossenen Feldbus und/oder drahtlos per Funk bzw. IEEE 802.15.1 oder IEEE 802.15.4 konform - an ein elektronisches Datenverarbeitungssystem, etwa eine Speicherprogrammierbare Steuerung (SPS) und/oder einen Prozeßleitstand, übermittelt werden. Zum Visualisieren von Meßsystem intern erzeugten Meßwerten und/oder gegebenenfalls Meßsystem intern generierten Systemstatusmeldungen, wie etwa einer Fehlermeldung oder einem Alarm, vor Ort kann das Meßsystem beispielsweise ein mit der Umformer-Elektronik 20 kommunizierendes, ggf. auch portables oder auch - wie in Fig. 3 angedeutet - als Bestandteil der Umformer-Elektronik 20 ausgebildetes, Anzeige- und Bedienelement HMI aufweisen, wie etwa ein im Schutzgehäuse 200 hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch fernparametrierbare, Umformer-Elektronik 20 ferner so ausgelegt sein, daß sie im Betrieb des Meßsystems mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Parameter-Meßwerte vom strömenden Fluid, Meßsystem spezifische Systemdiagnosewerte und/oder der Steuerung des Meßsystems dienende Einstellwerte. Des weiteren kann die Umformer-Elektronik 20 so ausgelegt sein, daß sie von einer externen Energieversorgung, beispielsweise auch über das vorgenannte Feldbussystem, gespeist werden kann. Alternativ oder in Ergänzung kann aber auch ein chemischer Energiespeicher, etwa in Form eines innerhalb des Schutzgehäuses 200 oder innerhalb eines am Schutzgehäuse 200 entsprechend angedockten, separaten Versorgungsmoduls plazierten Batterie- bzw. Akku-Pakets, zur Energieversorgung des Meßsystems verwendet werden. Nicht zuletzt für den erwähnten Fall, daß das Meßsystem für eine Ankopplung an ein Feldbus- oder ein anderes Kommunikationssystem vorgesehen ist, kann die, beispielsweise auch vor Ort und/oder via Kommunikationssystem (re-)programmierbare, Umformer-Elektronik 20 ferner eine für eine Datenkommunikation gemäß einem der einschlägigen Industriestandards ausgebildete Kommunikations-Schnittstelle COM aufweisen. Nämliche Kommunikations-Schnittstelle COM kann z.B. eingerichtet sein, Meß-und/oder Betriebsdaten, mithin die wenigstens eine Meßgröße repräsentierenden Meßwerte, an die vorbezeichnete speicherprogrammierbare Steuerung oder ein übergeordnetes Prozeßleitsystem zu senden und/oder Einstelldaten für das Meßsystem zu empfangen. Darüberhinaus kann die Umformer-Elektronik 20 beispielsweise eine solche interne Energieversorgungsschaltung NRG aufweisen, die im Betrieb von einer im vorgenannten Datenverarbeitungssystem vorgesehen externen Energieversorgung über das vorgenannte Feldbussystem gespeist wird. Hierbei kann die Umformer-Elektronik 20 ferner z.B. so ausgebildet sein, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann; das Meßsystem kann aber beispielsweise auch als sogenanntes Vierleiter-Meßgerät ausgebildet sein, bei dem die interne Energieversorgungsschaltung NRG der Umformer-Elektronik 20 mittels eines ersten Paars Leitungen mit einer externen Energieversorgung und die vorbezeichnete interne Kommunikationsschaltung COM der Umformer-Elektronik 20 mittels eines zweiten Paars Leitungen mit einer externen Datenverarbeitungsschaltung oder einem externen Datenübertragungssystem verbunden ist.

Zum Verarbeiten der wenigstens zwei Sensorsignale s1, s2 bzw. zum Generieren der Meßwerte $X_M$ aus den Sensorsignalen s1, s2 kann die Umformer-Elektronik 20, wie auch in Fig. 3 schematisch dargestellt, ferner eine - beispielsweise mittels eines oder mehrerer Mikroprozessoren und/oder mittels eines oder mehrerer digitalen Signalprozessoren (DSP) und/oder mittels eines oder mehrerer programmierbaren Logikbausteine (FPGA) und/oder mittels eines oder mehrerer kundenspezifisch programmierter Logikbausteine (ASIC) gebildete und/oder als Mikrocomputer eingerichtete - Meß- und Auswerte-Schaltung $\mu$C aufweisen. Jedes der Sensorsignale s1, s2 kann dementsprechend in der Umformer-Elektronik 20, beispielsweise nämlich mittels einer in der Meß-und Auswerteschaltung $\mu$C vorgesehenen, gleichwohl jeweils eine Schnittstelle zur Sensoranordnung 210 bzw. zur Sensoranordnung 220 bildenden Signaleingangsstufe A/D, zunächst für die weitere Auswertung aufbereitet, nämlich geeignet vorverstärkt und - nicht zuletzt zwecks einer entsprechenden Bandbegrenzung zur Wahrung des Nyquist-Abtasttheorems - hernach gefiltert werden. Die Meßund Auswerte-Schaltung $\mu$C kann zudem, wie auch in Fig. 3 schematisch dargestellt, wenigstens einen, beispielsweise dem Vorhalten von Steuer- und Betriebsprogrammen bzw. von Funktionsweisen der Meß- und Auswerte-Schaltung $\mu$C bestimmenden Einstellwerten dienlichen, nicht-flüchtigen Speicher EEPROM und/oder einen, beispielsweise dem temporären Speichern von mittels der Signaleingangsstufe A/D generierten Abtastwerten dienlichen und/oder im ggf. vorgesehenen wenigstens einen Mikroprozessor integrierten, flüchtigen Speicher RAM aufweisen. Zudem können beispielsweise auch Programm-Codes für der Generierung von Meßwerten dienliche Auswerteprogramme für Meß- und Auswerteschaltung $\mu$C im vorbezeichneten nicht-flüchtigen Datenspeicher EEPROM persistent gespeichert sein und beim Aufstarten der Umformer-Elektronik 20 in den vorbezeichneten flüchtigen Datenspeicher RAM geladen werden. Gleichermaßen können mittels der Umformer-Elektronik 20 bzw. deren Meß- und Auswerte-Schaltung $\mu$C im Betrieb generierte Meßwerte in einen den flüchtigen Speicher RAM und/oder den nicht-flüchtigen Speicher EEPROM geladen und für eine spätere Weiterverarbeitung zumindest temporär vorgehalten werden.

Wie in Fig. 3 bzw. 4 gezeigt, ist die Umformer-Elektronik 20 des erfindungsgemäßen Meßsystems ferner auch dafür eingerichtet, sowohl das, ggf. zunächst aufbereitete Sensorsignal s1 in eine nämliches Sensorsignal s1 approximierende erste Sensorsignal-Abtastfolge $s_{D1}$, nämlich eine Sequenz von zu verschieden Abtastzeitpunkten $t_m = m \cdot T_{s1}$, mithin mit einer Abtastrate $f_{s1} = 1 / (t_{m+1} - t_m) = 1 / T_{s1}$ aus dem Sensorsignal s1 gewonnenen digitalen Abtastwerten $S_{D1}[m] = S_{D1}[t_m \cdot f_{s1}]$ zu wandeln, als auch das, ggf. zunächst aufbereitete Sensorsignal s2 in eine nämliches Sensorsignal s2 approximierende zweite Sensorsignal-Abtastfolge $s_{D2}$, nämlich einer Sequenz von zu verschieden Abtastzeitpunkten $t_n = n \cdot T_{s2}$, mithin mit einer Abtastrate $f_{s2} = 1 / (t_{n+1} - t_n) = 1 / T_{s2}$ aus dem Sensorsignal s2 gewonnenen digitalen Abtastwerten $S_{D2}[n] = S_{D2}[t_n \cdot f_{s2}]$ zu wandeln; dies im besonderen in der Weise, daß die zweite Sensorsignal-Abtastfolge $s_{D2}$ zumindest die vorbezeichnete wenigstens eine Nutzkomponente $s_N$ approximiert bzw. daß zumindest eine momentane Frequenz und/oder zumindest eine momentane Amplitude und/oder zumindest ein momentaner Phasenwinkel nämlicher Nutzkomponente $s_N$ anhand der Sensorsignal-Abtastfolge $s_{D2}$ ermittelt werden kann. Die vorbezeichneten Abtastrate $f_{s1}$ bzw. $f_{s2}$ sind für zumindest ein gegebenes Zeitintervall konstant gehalten, derart, daß die vorbezeichneten Abtastzeitpunkte $t_m$ bzw. $t_n$ zumindest während nämlichen Zeitintervalls zeitlich äquidistant sind. Jede der Abtastraten $f_{s1}$ bzw. $f_{s2}$ ist ferner jeweils möglichst so hoch gewählt, daß zumindest ein die im Betrieb möglichen Signalfrequenzen der veränderlichen Nutzkomponente $s_N$ einschließendes Frequenzintervall wieder rekonstruierbar in jeder der Sensorsignal-Abtastfolgen $s_{D1}$, $s_{D2}$ enthalten ist. Die Abtastraten $f_{s1}$, $f_{s2}$ können dafür beispielsweise so hoch gewählt sein, daß sie mehr als ein Doppeltes einer höchsten Signalfrequenz der Nutzkomponenten $s_N$ des Sensorsignals s2 beträgt. Alternativ oder in Ergänzung kann die Abtastrate $f_{s1}$ ferner auch so eingestellt sein, daß sie gleich Abtastrate $f_{s2}$ ist. Für die Bildung der Abtastfolgen $s_{D1}$ bzw. $s_{D2}$ jeweils benötigte bzw. die jeweilige Abtastrate $f_{s1}$ bzw. $f_{s2}$ definierende Taktsignale können beispielsweise mittels eines in der Meß- und Auswerteschaltung $\mu$C vorgesehenen Taktgenerators und entsprechender, ggf. auch verstellbarer, Frequenzteiler bereitgestellt werden. Die Sensorsignal-Abtastfolgen $s_{D1}$, $s_{D2}$ werden im weiteren Verlauf mittels der Meß- und Auswerteschaltung $\mu$C weiter ausgewertet, derart, daß basierend auf den Sensorsignal-Abtastfolgen $s_{D1}$, $s_{D2}$ der wenigstens eine Meßwert ermittelt bzw. eine entsprechende Meßwertefolge $x_M$, nämlich einer Sequenz von zeitlich aufeinanderfolgenden, mithin die wenigstens eine Meßgröße zeitlich aufeinanderfolgend repräsentierenden digitalen Meßwerten $X_M$ erzeugt wird; dies beispielsweise derart, daß anhand der Frequenz der Nutzkomponente $s_N$ eine Strömungsgeschwindigkeit und/oder eine Volumendurchflußrate des entlang des Strömungspfades strömenden Fluids FL ermittelt wird, etwa für den vorbezeichneten Fall, daß mittels des Strömungshindernisses 120 im stromabwärts davon strömenden Fluid FL eine *Kármánsche* Wirbelstraße bewirkt wird und daß entsprechend die Frequenz der Nutzkomponente $s_N$ mit einer Ablöserate von am Strömungshindernis 120 abgelösten Wirbeln bzw. damit einhergehenden Druckschwankungen korrespondiert. Alternativ oder in Ergänzung kann basierend auf den Sensorsignal-Abtastfolgen $s_{D1}$, $s_{D2}$ beispielsweise auch die vorbezeichnete Druckdifferenz zwischen dem Teilbereich 100-1 und dem Teilbereich 100-3 ermittelt bzw. anhand dessen die Strömungsgeschwindigkeit und/oder eine Volumendurchflußrate des Fluids FL berechnet werden.

Wie bereits erwähnt kann gelegentlich auch bereits stromaufwärts des Teilbereichs 100-1, mithin bereits vor Erreichen der Sensoranordnung 210 bzw. außerhalb des Meßsystems dem strömenden Fluid FL eine zeitlich ändernde bzw. nicht ohne weiteres vorhersehbare externe Störung eingeprägt werden, derart, nämliche externe Störung sowohl das Sensorsignal s1 bzw. dessen Frequenzspektrum als auch - zusammen mit der vorbezeichneten (internen) Störung d - das Sensorsignal s2 bzw. dessen Frequenzspektrum beeinflußt. Im Ergebnis kann das Sensorsignal s2 neben der Nutzkomponente auch zahlreiche weitere Signalkomponenten aufweisen, die beispielsweise nur einen geringen Frequenzabstand zur Nutzkomponente und/oder eine signifikant größere Amplitude aufweisen. Solche Störungen können z.B. durch Pumpen oder Ventile induzierte Druckpulsationen im strömenden Fluid oder aber beispielsweise auch durch Vibrationen der Rohrleitung verursacht sein.

Um dennoch die im Sensorsignal $s_2$ enthaltene Nutzkomponente $s_N$ möglichst schnell, gleichwohl möglichst präzise aus dem Sensorsignal $s_2$ herausfiltern zu können, ist, wie auch in Fig. 4 in der Umformer-Elektronik 20, beispielsweise nämlich in deren vorbezeichneter Meß- und Auswerte-Schaltung μC, ein digitales adaptives Filters LPE, nämlich ein dem (digitalen) Filtern der Sensorsignal-Abtastfolge $s_{D1}$ dienlichen digitalen Filters implementiert. Bei einem digitalen adaptiven Filter handelt es sich bekanntlich um spezielles Filter der Signalverarbeitung, das die Eigenschaft besitzt, seine z-Übertragungsfunktion im Betrieb selbständig, nämlich gesteuert durch einen intern ausgeführten Regelalgorithmus verändern zu können, derart, daß eine eingangs anliegende Abtastfolge mittels eines hinsichtlich seines Durchlaßbereichs bzw. einer diesen charakterisierende Mittenfrequenz einstellbaren Transversalfilters, beispielsweise einem Filter mit einer endlichen Impulsantwort (*finite impulse response filter*) manipuliert wird, und bei dem der Durchlaßbereich bzw. die Übertragungsfunktion des Transversalfilters wiederum solange durch numerische Neuberechnung der Filterkoeffizienten verändert wird, bis eine mittels des Transversalfilters generierte Ausgangsfolge mit einer zu erreichende Zielfolge zumindest näherungsweise bzw. ausreichend genau übereinstimmt.

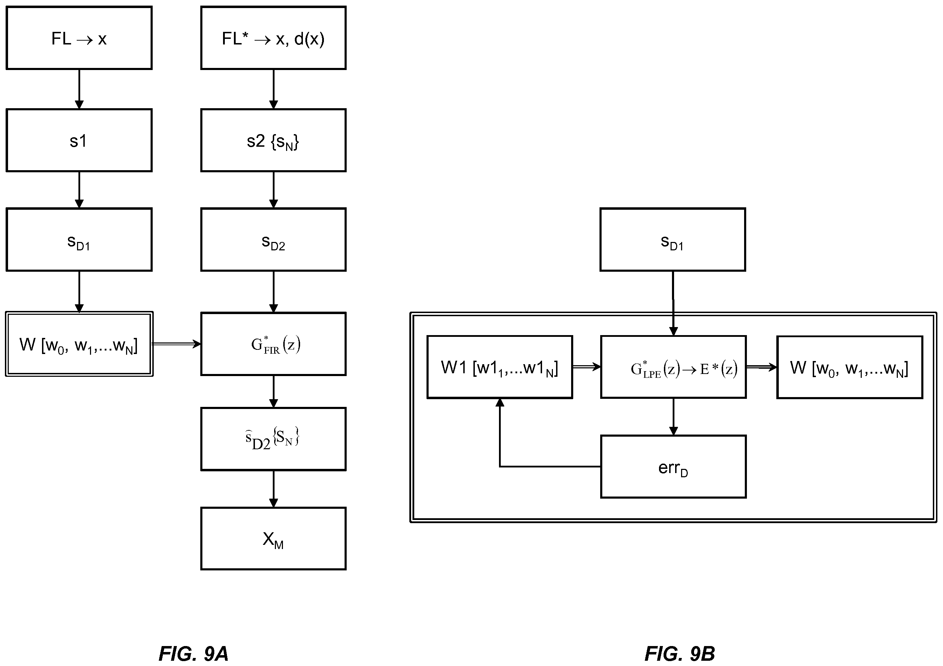

Die Umformer-Elektronik 20 des Meßsystems ist dementsprechend ferner eingerichtet, mittels des vorbezeichneten digitalen adaptiven Filters LPE aus der Sensorsignal-Abtastfolge $s_{D1}$ zunächst einen Nutzfilterkoeffizienten-Satz W, nämlich einen Satz von N, beispielsweise nämlich mit einer Anzahl N von nicht weniger als fünf ( $N \geq 5$ ), Filterkoeffizienten $w_k$, zu ermitteln, und, wie in Fig. 4 bzw. 9a schematisiert dargestellt, hernach mittels nämlichen Nutzfilterkoeffizienten-Satzes W eine Übertragungsfunktion bzw. eine z-Übertragungsfunktion $G^*_{FIR}(z)$ eines Nutzsignalfilters FIR-N, nämlich eines dem (digitalen) Filtern der Sensorsignal-Abtastfolge $s_{D2}$ dienlichen digitalen Filters zu bilden, derart, daß die vorbezeichnete z-Übertragungsfunktion $G^*_{FIR}(z)$ des Nutzsignalfilters FIR-N, mithin ein Durchlaßbereich bzw. eine Mittenfrequenz des Nutzsignalfilters FIR-N, durch nämlichen Nutzfilterkoeffizienten-Satz W bestimmt ist. Die Filterkoeffizienten $w_k$ des Nutzfilterkoeffizienten-Satzes W können hierbei so gewählt sein, daß wenigstens zwei - beispielsweise auch mehrere oder sämtliche - der Filterkoeffizienten $w_k$ des Nutzfilterkoeffizienten-Satzes W voneinander abweichen, beispielsweise nämlich unterschiedliche Beträge und/oder unterschiedliche Vorzeichen aufweisen. Bei dem Nutzsignalfilter FIR-N kann sich beispielsweise um ein digitales Filter mit endlicher Impulsantwort handeln.

Desweiteren ist die Umformer-Elektronik 20 zudem auch eingerichtet, mittels nämlichen Nutzsignalfilters FIR-N sowie mittels der Sensorsignal-Abtastfolge $s_{D2}$ eine Nutzsignalfolge $\widehat{s}_{D2}$ , nämlich einer Sequenz von mittels des Nutzsignalfilters FIR aus der Sensorsignal-Abtastfolge $s_{D2}$ berechneten digitalen Funktionswerten

$$\widehat{s}_{D2}[n] = \sum_{k=0}^{N-1} w_k \cdot s_{D2}[n-k]$$

zu erzeugen; dies gemäß einer weiteren Ausgestaltung zumindest zeitweise derart, daß, wie auch in Fig. 9a angedeutet, die Nutzsignalfolge $\widehat{s}_{D2}$ zumindest die Nutzkomponente enthält bzw. approximiert ( $\widehat{s}_{D2} = \widehat{s}_{D2}\{s_N\}$ ). Desweiteren ist die Umformer-Elektronik 20 zudem auch dafür eingerichtet, aus der vorbezeichneten Nutzsignalfolge $\hat{s}_{D2}$ die als Meßwertefolge $x_M$ dienliche Sequenz von digitalen Meßwerten $X_M$ zu erzeugen, beispielsweise nämlich anhand der Nutzsignalfolge $\widehat{s}_{D2}$ die vorbezeichnete Frequenz der Nutzkomponente $s_N$ wiederkehrend zu ermitteln, etwa um anhand so jeweils gewonnenen Frequenz der Nutzkomponente, wie bereits erwähnt, die Strömungsgeschwindigkeit und/oder die Volumendurchflußrate des strömenden Fluids FL aktuell zu berechnen. Alternativ oder in Ergänzung kann die Umformer-Elektronik 20 bzw. deren Meß- und Auswerte-Schaltung μC ferner beispielsweise auch eingerichtet sein, anhand einer wiederkehrend aus Nutzsignalfolge $\hat{s}_{D2}$ ermittelten Signalfrequenz für die Nutzkomponente $s_N$ wiederkehrend eine Strömungsgeschwindigkeit und/oder eine Volumendurchflußrate des strömenden Fluids FL zu berechnen oder beispielsweise aus der vorbezeichneten Nutzsignalfolge $\hat{s}_{D2}$ und der Sensorsignal-Abtastfolge $s_{D1}$ wiederkehrend eine Druckdifferenz und/oder eine Volumendurchflußrate des strömenden Fluids FL zu berechnen. Zudem kann die Meß- und Auswerte-Schaltung μC bzw. die damit gebildete Umformer-Elektronik 20 auch dafür eingerichtet sein, die Nutzsignalfolge $\hat{s}_{D2}$ für die Ermittlung des Meßwertes $X_M$ bzw. die Erzeugung der Meßwertefolge $x_M$ zunächst nochmals zu filtern bzw. noch wieter zu glätten, beispielsweise mittels eines dem Nutzsignalfilters FIR-N nachgeschalteten bzw. darin integrierten, weiteren digitalen Signalfilter FIR-N*. Nämliches Signalfilter FIR-N* kann beispielsweise ein als Tief-, Hoch- und/oder Bandpassfilter konfiguriertes FIR-Filter sein, ggf. auch mit einem an die Nutzkomponente angepaßten und/oder nachführbaren Durchlaßbereich bzw. mit einer an die Nutzkomponente angepaßten und/oder nachführbaren Mittenfrequenz.

Die mittels des Nutzfilterkoeffizienten-Satzes W gebildete z-Übertragungsfunktion $G_{FIR}^{*}(z)$ des auf die mit der Abtatstrate $T_{s2}$ generierte Sensorsignal-Abtastfolge $s_{D2}$ entsprechend anzuwendenden Nutzsignalfilters FIR-N kann allgemein beispielsweise folgendermaßen formuliert werden:

$$G_{FIR}^{*}(z) = Z(g[n]) = \sum_{k=0}^{N-1} w_k \cdot z^{-k} = \sum_{k=0}^{N-1} w_k \cdot e^{-j\omega T_{s2}} \tag{1}.$$

Der Nutzfilterkoeffizienten-Satz W bzw. das damit gebildete Nutzsignalfilter FIR-N können. wie bereits angedeutet, fünf oder mehr ($N \geq 5$), beispielsweise nämlich ohne weiteres auch mehr als 10 ($N > 10$), Filterkoeffizienten $w_k$ enthalten. Für den vorbezeichneten Fall, daß die Umformer-Elektronik 20 bzw. deren Meß- und Auswerteschaltung $\mu$C einen, insb. nicht-flüchtigen, Speicher EEPROM aufweist, können die Filterkoeffizienten $w_k$ des Nutzfilterkoeffizienten-Satzes W zudem beispielsweise auch in nämlichem Speicher EEPROM, beispielsweise persistent, abgespeichert werden. Darüberhinaus kann die Meß- und Auswerte-Schaltung $\mu$C bzw. die damit gebildete Umformer-Elektronik 20, etwa zwecks Erhöhung der Rechengeschwindigkeit, einen dem Ermitteln des Nutzfilterkoeffizienten-Satzes W, mithin dem Ausführen des adaptives Filters LPE dienlichen ersten Signal- bzw. Mikroprozessor sowie einen dem Verarbeiten der Sensorsignal-Abtastfolge $s_{D2}$ zur Nutzsignalfolge $\widehat{s}_{D2}$, mithin dem Ausführen Nutzsignalfilters FIR-N dienlichen zweiten Signal- bzw. Mikroprozessor aufweisen.

Nach einer weiteren Ausgestaltung ist ferner vorgesehen bzw. ist die Umformer-Elektronik 20 ferner eingerichtet, die die vorbezeichnete z-Übertragungsfunktion $G_{FIR}^{*}(z)$ des Nutzsignalfilters FIR-N zunächst bestimmenden - beispielsweise ebenfalls aus der Sensorsignal-Abtastfolge $s_{D1}$ zuvor ermittelten und/oder vom Nutzfilterkoeffizienten-Satz W abweichenden - Nutzfilterkoeffizienten-Satzes W* durch den Nutzfilterkoeffizienten-Satz W gelegentlich, beispielsweise auch wiederkehrend und/oder zyklisch mit einer vorgebbaren bzw. vorgegebenen Austauschrate, zu ersetzten; dies beispielsweise auch derart, daß die Umformer-Elektronik 20 den Nutzfilterkoeffizienten-Satz W regelmäßig komplett neu berechnet und hernach automatisch den aktuellen, gleichwohl zu ersetzenden Nutzfilterkoeffizienten-Satz W* gleichermaßen regelmäßig mit der vorbezeichneten Austauschrate oder beispielsweise auch nur bei Bedarf, etwa weil der aktuelle Nutzfilterkoeffizienten-Satze W* und der neue Nutzfilterkoeffizienten-Satz W sich um mehr als ein vorgegebenes Toleranzmaß voneinander unterscheiden, durch den jeweils neuen Nutzfilterkoeffizienten-Satz W ersetzt.

Das vorbezeichnete Ersetzen des die z-Übertragungsfunktion $G_{FIR}^{*}(z)$ des Nutzsignalfilters FIR-N zunächst bestimmenden Nutzfilterkoeffizienten-Satzes W* durch den Nutzfilterkoeffizienten-Satz W kann mit der Austauschrate zyklisch beispielsweise in der Weise wiederholt werden, daß nämliche Austauschrate niedriger ist als die Abtastrate $f_{s1}$ der Sensorsignal-Abtastfolge $s_{D1}$ und/oder niedriger ist als die Abtastrate $f_{s2}$ der Sensorsignal-Abtastfolge $s_{D2}$.

Nach einer weiteren Ausgestaltung der Erfindung ist das digitale adaptive Filter LPE dafür konfektioniert bzw. ist die Umformer-Elektronik 20 eingerichtet, um aus der Sensorsignal-Abtastfolge $s_{D1}$ zunächst eine Schätzsignalfolge $\widehat{s}_{D1}$, nämlich eine Sequenz von mittels des adaptive Filter LPE aus der Sensorsignal-Abtastfolge $s_{D1}$ berechneten digitalen Funktionswerten $\widehat{s}_{D1}[m]$ zu generieren; dies insb. mit dem Ziel bzw. derart, daß nämliche Schätzsignalfolge $\widehat{s}_{D1}$ zumindest zeitweise gleich oder zumindest näherungsweise gleich der Sensorsignal-Abtastfolge $s_{D1}$ ist bzw. einen minimalen quadratischen Fehler (*BLUP - Best Linear Unbiased Prediction*) zur Sensorsignal-Abtastfolge $s_{D1}$ aufweist. Dafür kann die Umformer-Elektronik 20 ferner auch eingerichtet sein, die Filterkoeffizienten $w_k$ des Nutzfilterkoeffizienten-Satzes W mittels eines LMS-Algorithmus *(Least-Mean-Squares-Algorithmus)* und/oder mittels eines RMS-Algorithmus (*Recursive-Least-Squares-Algorithmus*) zu ermitteln.

Nach einer weiteren Ausgestaltung ist dementsprechend ferner vorgesehen, daß das vorbezeichnete digitale adaptive Filter LPE, wie auch in Fig. 9b angedeutet, ein - hier auf die Sensorsignal-Abtastfolge $s_{D1}$ entsprechend anzuwendendes - Transversalfilter FIR-A, nämlich ein digitales Filter mit einer durch einen Transversalfilterkoeffizienten-Satz W1, nämlich einen Satz von M Filterkoeffizienten $w1_k[n]$ bestimmten z-Übertragungsfunktion $G_{LPE}^{*}(z)$ umfaßt.

Bei dem Transversalfilter FIR-A kann sich beispielsweise um ein digitales Filter mit endlicher Impulsantwort handeln (FIR-Filter). Dementsprechend kann die mittels des Transversalfilterkoeffizienten-Satzes W1 gebildete z-Übertragungsfunktion $G_{FIR}^{*}(z)$ des Transversalfilters FIR-A allgemein bzw. angewendet auf die mit der Abtatstrate $T_{s1}$ generierte Sensorsignal-Abtastfolge $s_{D1}$ beispielsweise folgendermaßen formuliert werden:

$$G_{LPE}^{*}(z) = Z(g[m]) = \sum_{k=1}^{M} w1_k \cdot z^{-k} = \sum_{k=1}^{M} w1_k \cdot e^{-j\omega T_{s1}} \qquad (2).$$

Für den vorbezeichneten Fall, daß die Umformer-Elektronik 20 bzw. deren Meß- und Auswerteschaltung μC einen, insb. nicht-flüchtigen, Speicher EEPROM aufweist, können die Filterkoeffizienten $w1_k$ des Transversalfilterkoeffizienten-Satzes W1 zudem beispielsweise auch in nämlichem Speicher EEPROM, beispielsweise persistent, abgespeichert werden, ggf. auch zusammen mit den Filterkoeffizienten $w_k$ des Nutzfilterkoeffizienten-Satzes W. Die Umformer-Elektronik 20 bzw. deren Meß- und Auswerte-Schaltung μC kann zudem ferner dafür vorgesehen bzw. eingerichtet sein, die Übertragungsfunktion bzw. z-Übertragungsfunktion des Transversalfilters FIR-A, mithin einen Durchlaßbereich bzw. eine diesen charakterisierende Mittenfrequenz nämlichen Transversalfilter FIR-A, durch numerische Neuberechnung der M Filterkoeffizienten $w1_k[n]$ wiederkehrend zu verändern, derart, daß ausgangs des Transversalfilters die vorbezeichnete Schätzsignalfolge $\widehat{s}_{D1}$ bereitgestellt ist und daß nämliche Schätzsignalfolge $\widehat{s}_{D1}$ im Ergebnis mit der - hier als zu erreichende Zielfolge dienlichen - Sensorsignal-Abtastfolge $s_{D1}$ zumindest näherungsweise bzw. ausreichend genau übereinstimmt. Dementsprechend ist gemäß einer weiteren Ausgestaltung der Erfindung vorgesehen bzw. ist die Umformer-Elektronik 20 eingerichtet, mittels des Transversalfilter FIR-A sowie der Sensorsignal-Abtastfolge $s_{D1}$ die Schätzsignalfolge $\widehat{s}_{D1}$ als eine Sequenz von mittels des digitalen Transversalfilters FIR-A aus der Sensorsignal-Abtastfolge $s_{D1}$ berechnete digitale Funktionswerten $\widehat{S}_{D1}[m]$ zu erzeugen; dies in Übereinstimmung mit der vorbezeichneten z-Übertragungsfunktion $G_{LPE}^{*}(z)$ des Transversalfilters FIR-A (Gl. 2) beispielsweise gemäß der Berechnungsvorschrift:

$$\widehat{S}_{D1}[m] = \sum_{k=1}^{M} w1_k \cdot S_{D1}[m-k] \qquad (3).$$

Das Ermitteln der Filterkoeffizienten $w1_k$ des Transversalfilterkoeffizienten-Satzes W1 kann, wie bereits angedeutet, beispielsweise derart bzw. mit dem Ziel erfolgen, daß die Schätzsignalfolge $\widehat{s}_{D1}$ die Sensorsignal-Abtastfolge $s_{D1}$ möglichst gut approximiert bzw. prognostiziert, insb. nämlich im Ergebnis gleich oder zumindest näherungsweise gleich der Sensorsignal-Abtastfolge $s_{D1}$ ist bzw. einen minimalen quadratischen Fehler (*BLUP - Best Linear Unbiased Prediction*) zur Sensorsignal-Abtastfolge $s_{D1}$ aufweist. Dafür wird gemäß einer weiteren Ausgestaltung der Erfindung mittels der Umformer-Elektronik 20 bzw. dem darin implementierten digitalen adaptiven Filter LPE, wie auch in Fig. 9b schematisch dargestellt, eine Schätzfehlerfolge $err_D$, nämlich eine Sequenz von digitalen Funktionswerten $Err_D[m] = f(S_{D1}[m], \widehat{S}_{D1}[m])$ ermittelt, von denen jeder jeweils eine - auf den jeweiligen Abtastzeitpunkt $t_m$ bezogene bzw. momentane - Abweichung zwischen einem jeweiligen Abtastwert $S_{D1}[m]$ der Sensorsignal-Abtastfolge $s_{D1}$ und einem nämlichen Abtastwert $S_{D1}[m]$ approximierenden Funktionswert $\widehat{S}_{D1}[m]$ der Schätzsignalfolge $\widehat{s}_{D1}$ repräsentiert ; dies beispielsweise derart, daß wiederkehrend jeweils ein digitaler Funktionswert $Err_D[m] = S_{D1}[m] - \widehat{S}_{D1}[m]$ gebildet wird, der eine dementsprechende Differenz zwischen dem Abtastwert $S_{D1}[m]$ der Sensorsignal-Abtastfolge $s_{D1}$ und dem jeweils zugehörigen Funktionswert $\widehat{S}_{D1}[m]$ der Schätzsignalfolge $\widehat{s}_{D1}$ repräsentiert. Basierend auf der vorbezeichneten z-Übertragungsfunktion $G_{PE}^{*}(z)$ des digitalen Transversalfilters FIR-A kann eine entsprechende, dem Erzeugen der Schätzfehlerfolge $err_D$ aus der Sensorsignal-Abtastfolge $s_{D1}$ dienliche Schätzfehlerfunktion E*(z) beispielsweise gemäß folgender Berechnungsvorschrift gebildet sein:

$$E*(z) = 1 - G_{LPE}^{*}(z) = 1 - \sum_{k=1}^{M} w1_k \cdot z^{-k} \qquad (4)$$

bzw. können die aus der Sensorsignal-Abtastfolge $s_{D1}$ berechneten digitalen Funktionswerte $Err_D[m]$ der Schätzfehlerfolge $err_D$ der Funktion:

$$Err_D[m] = S_{D1}[m] - \sum_{k=1}^{M} w1_k \cdot S_{D1}[m-k] \qquad (5)$$

entsprechen.

Wie bereits erwähnt, können die Filterkoeffizienten $w1_k$ des Transversalfilterkoeffizienten-Satzes W1 bzw. der damit gebildeten Schätzfehlerfunktion E*(z) ferner beispielsweise jeweils mittels eines in der Umformer-Elektronik 20 bzw. deren Meß-und Auswerteschaltung $\mu C$ ausgeführten LMS- und/oder RMS-Algorithmus ermittelt werden, beispielsweise derart, daß die Funktionswerte $Err_D[m]$ zumindest näherungsweise Null sind. Der Nutzfilterkoeffizienten-Satz W für das Nutzsignalfilter FIR-N kann, wie bereits angedeutet bzw. in Fig. 9a und 9b jeweils gezeigt, hernach aus dem Transversalfilterkoeffizienten-Satz W1 des Transversalfilter FIR-A, beispielsweise durch Übernehmen, ermittelt werden, falls die Schätzsignalfolge $\widehat{s}_{D1}$ zumindest für ein vorgegebenes Abtast- bzw. Zeitintervall - beispielsweise von größer als M bzw. $M \cdot T_{s1}$ - gleich oder zumindest näherungsweise gleich der Sensorsignal-Abtastfolge $s_{D1}$ ist bzw. einen einen minimalen quadratischen Fehler *(BLUP - Best Linear Unbiased Prediction)* zur Sensorsignal-Abtastfolge $s_{D1}$ aufweist bzw. falls die Schätzfehlerfunktion E*(z) entsprechend lange näherungsweise Null ist. Nach einer weiteren Ausgestaltung der Erfindung ist dementsprechend vorgesehen, daß der Nutzfilterkoeffizienten-Satz W sämtliche M Filterkoeffizienten $w1_k$ des Transversalfilterkoeffizienten-Satzes W1 enthält; dies im besonderen auch in der Weise, daß jeder Filterkoeffizient $w_{1k}$ des Transversalfilterkoeffizienten-Satzes W1 als Filterkoeffizient $w_k$ des Nutzfilterkoeffizienten-Satzes W übernommen wird ($w_{1k} \rightarrow w_k$) bzw. daß für jeden Filterkoeffizient $w_{1k}$ des Transversalfilterkoeffizienten-Satzes W1 gilt: $w_{1k} = w_k$. Dementsprechend kann der Transversalfilterkoeffizienten-Satz W1 gleichermaßen wie der Nutzfilterkoeffizienten-Satz W bzw. kann das Transversalfilter FIR-A gleichermaßen wie das Nutzsignalfilter FIR-N fünf oder mehr, beispielsweise auch mehr als 10 (M > 10), Filterkoeffizienten $w1_k$ enthalten. Nicht zuletzt für den vorbeschriebenen Fall, daß anhand der Nutzsignalfolge $\widehat{s}_{D2}$ die vorbezeichnete Frequenz der Nutzkomponente $s_N$ wiederkehrend zu ermitteln ist, ist gemäß einer weiteren Ausgestaltung der Erfindung zudem vorgesehen, daß der Nutzfilterkoeffizienten-Satz W bzw. das damit gebildete Nutzsignalfilter FIR-N zumindest zeitweise wenigstens einen von Null verschiedenen, beispielsweise nämlich negativen und/oder vorgegebenen, Filterkoeffizienten $w1_0$ enthält, den der Transversalfilterkoeffizienten-Satz W1 bzw. das damit gebildete Transversalfilter FIR-A nicht enthält. Nämlicher Filterkoeffizient $w1_0$ kann beispielsweise -1 betragen ($w1_0 = -1$), so daß also im Ergebnis die Nutzsignalfolge $\widehat{s}_{D2}$ praktisch dadurch gebildet ist, daß eine auf den jeweiligen Abtastzeitpunkt $t_n$ passend synchronisierte Sensorsignal-Schätzfolge für das Sensorsignal s1 (bzw. eine entsprechende künstliche Sensorsignal-Abtastfolge) von der Sensorsignal-Abtastfolge $s_{D2}$ abgezogen wird. Alternativ oder in Ergänzung können Nutzfilterkoeffizienten-Satz W und Transversalfilterkoeffizienten-Satz W1 bzw. das damit jeweils gebildete Signalfilter (FIR-N bzw. FIR-A) zumindest zeitweise identisch sein, beispielsweise um basierend auf sowohl der Nutzsignalfolge $\widehat{s}_{D2}$ als auch der Sensorsignal-Abtastfolge $s_{D1}$ und/oder der Schätzsignalfolge $\widehat{s}_{D1}$ die vorbezeichnete, vom Volumendurchfluß abhängige Druckdifferenz zwischen dem im Teilbereich 100-1 strömenden Fluid und dem im Teilbereich 100-3 strömenden Fluid zu ermitteln.

**Patentansprüche**

1. Meßsystem zum Messen wenigstens einer zeitlich veränderlichen Meßgröße (x), insb. einer Strömungsgeschwindigkeit, einer Volumendurchflußrate, eines Drucks, einer Druckdifferenz, oder einer Dichte, eines entlang eines Strömungspfades mit einer vorgegebenen Strömungsrichtung strömenden Fluids (FL), welches Meßsystem umfaßt:

- eine, insb. in den Verlauf einer Rohrleitung einsetzbare und/oder als Bestandteil einer Rohrleitung ausgebildete, Rohranordnung (100)

- - mit einem einen ersten Teilbereich (100-1) des Strömungspfades, einen in Strömungsrichtung stromabwärts des ersten Teilbereichs verorteten zweiten Teilbereich (100-2) des Strömungspfades sowie einen in Strömungsrichtung stromabwärts des zweiten Teilbereichs verorteten dritten Teilbereich (100-3) des Strömungspfades bildenden Lumen,

- - mit einer nämliches Lumen (100*) umhüllenden, insb. metallische und/oder monolithische, Rohrwand (110)

- und mit einem im zweiten Teilbereich des Strömungspfades innerhalb der Rohranordnung angeordneten, insb. an einer dem Lumen (100*) zugewandten Innenseite der Rohrwand damit fest verbundenen, Strömungshindernis (120) zum Bewirken einer - insb. von der wenigstens einen Meßgröße abhängigen und/oder als ein von der wenigstens einen Meßgröße abhängiger Meßeffekt dienlichen - Störung (d) im strömenden Fluid;

- eine, insb. zumindest teilweise am ersten Teilbereich und/oder zumindest teilweise innerhalb des ersten Teilbereichs angeordnete, erste Sensoranordnung (210), die eingerichtet ist, wenigstens ein erstes Sensorsignal (s1) zu erzeugen, das ein vom innerhalb des ersten Teilbereichs strömenden Fluid beeinflußtes erstes Frequenzspektrum aufweist;

- eine, insb. zumindest teilweise am dritten Teilbereich und/oder zumindest teilweise innerhalb des dritten Teilbereichs angeordneten und/oder zur ersten Sensoranordnung baugleichen, zweite Sensoranordnung (220), die eingerichtet ist, wenigstens ein zweites Sensorsignal (s2) zu erzeugen, das ein vom innerhalb des dritten Teilbereichs strömenden Fluid beeinflußtes - insb. nämlich vom ersten Frequenzspektrum abweichendes und/oder wenigstens eine Nutzkomponente, nämlich eine hinsichtlich wenigstens eines Signalparameters von der wenigstens einen Meßgröße (x) beeinflußte spektrale Signalkomponente enthaltendes - zweites Frequenzspektrum aufweist;

- sowie eine, insb. mittels wenigstens eines Mikroprozessors ($\mu$C) gebildete, Umformer-Elektronik (20);

- wobei die Umformer-Elektronik (20) eingerichtet ist,

- - sowohl das erste Sensorsignal (s1) zu empfangen und in eine nämliches Sensorsignal (s1) approximierende erste Sensorsignal-Abtastfolge ($s_{D1}$), nämlich eine Sequenz von zu verschieden, insb. zeitlich äquidistanten, Abtastzeitpunkten $t_n = n \cdot T_{s1}$, mithin mit einer, insb. konstanten, Abtastrate $f_{s1} = 1 / (t_{m+1} - t_m) = 1 / T_{s1}$ aus dem ersten Sensorsignal (s1) gewonnenen digitalen Abtastwerten $S_{D1}[m] = S_{D1}[t_m \cdot f_{s1}]$ zu wandeln,

- - als auch das zweite Sensorsignal (s2) zu empfangen und in eine nämliches Sensorsignal (s2) approximierende zweite Sensorsignal-Abtastfolge ($s_{D2}$), nämlich einer Sequenz von zu verschieden, insb. zeitlich äquidistanten, Abtastzeitpunkten $t_n = n \cdot T_{s2}$, mithin mit einer, insb. konstanten, Abtastrate $f_{s2} = 1 / (t_{n+1} - t_n) = 1 / T_{s2}$ aus dem zweiten Sensorsignal (s2) gewonnenen digitalen Abtastwerten $S_{D2}[n] = S_{D2}[t_n \cdot f_{s2}]$ zu wandeln, insb. derart, daß die zweite Sensorsignal-Abtastfolge ($s_{D2}$) wenigstens eine Nutzkomponente, nämlich eine von der wenigstens einen Meßgröße (x) beeinflußte spektrale Signalkomponente des zweiten Sensorsignals (s2) approximiert;

- wobei die Umformer-Elektronik eingerichtet ist,

- - mittels eines digitalen adaptiven Filters (LPE) aus der ersten Sensorsignal-Abtastfolge ($s_{D1}$) einen Nutzfilterkoeffizienten-Satz (W), nämlich einen Satz von N, insb. nämlich N ≥ 5, Filterkoeffizienten $w_k$ zu ermitteln

- - sowie mittels nämlichen Nutzfilterkoeffizienten-Satzes (W) eine z-Übertragungsfunktion $G_{FIR}^{*}(z)$, insb.

nämlich
$$G_{FIR}^{*}(z) = Z(g[n]) = \sum_{k=0}^{N-1} w_k \cdot z^{-k} = \sum_{k=0}^{N-1} w_k \cdot e^{-j\omega T_{s2}}$$
, eines Nutzsignalfilters (FIR-N), nämlich eines dem Filtern der zweiten Sensorsignal-Abtastfolge ($s_{D2}$) dienlichen digitalen Filters zu bilden, derart, daß die z-Übertragungsfunktion $G_{FIR}^{*}(z)$ des Nutzsignalfilters (FIR-N) durch nämlichen Nutzfilterkoeffizienten-Satz (W) bestimmt ist;

- und wobei die Umformer-Elektronik eingerichtet ist,

-- mittels nämlichen Nutzsignalfilters (FIR-N) sowie mittels der zweiten Sensorsignal-Abtastfolge ($s_{D2}$) eine Nutzsignalfolge $(\hat{s}_{D2})$, nämlich einer Sequenz von mittels des Nutzsignalfilters (FIR-N) aus der zweiten Sensorsignal-Abtastfolge ($s_{D2}$) berechneten digitalen Funktionswerten
$$\hat{S}_{D2}[n] = \sum_{k=0}^{N-1} w_k \cdot S_{D2}[n-k]$$

zu erzeugen

-- sowie aus der Nutzsignalfolge ($\hat{s}_{D2}$) eine Meßwertefolge ($x_M$), nämlich einer Sequenz von die wenigstens eine Meßgröße zeitlich aufeinanderfolgend repräsentierenden digitalen Meßwerten ($X_M$) zu erzeugen.

2. Meßsystem nach einem der vorherigen Ansprüche,

- wobei Umformer-Elektronik eingerichtet ist, die Filterkoeffizienten $w_k$ des Nutzfilterkoeffizienten-Satzes W mittels eines LMS-Algorithmus *(Least-Mean-Squares-Algorithmus)* und/oder mittels eines RMS-Algorithmus (*Recursive-Least-Squares-Algorithmus*) zu ermitteln; und/oder
- wobei die Umformer-Elektronik eingerichtet ist, einen Transversalfilterkoeffizienten-Satz (W1), nämlich einen Satz von eine z-Übertragungsfunktion $G_{LPE}^{*}(z)$ , insb. $G_{LPE}^{*}(z) = Z(g[m]) = \sum\limits_{k=1}^{M} w1_k \cdot z^{-k}$ oder

$G_{LPE}^{*}(z) = Z(g[m]) = \sum\limits_{k=1}^{M} w1_k \cdot z^{-k} = \sum\limits_{k=1}^{M} w1_k \cdot e^{-j\omega T_{s1}}$ , eines Transversalfilters (FIR-A) des digitale adaptive Filters (LPE) bestimmenden M Filterkoeffizienten $w1_k \leftarrow w1_k[n]$, insb. wiederkehrend, zu berechnen; und/oder

- wobei die Umformer-Elektronik eingerichtet ist, anhand der Nutzsignalfolge ( $\hat{s}_{D2}$ ) eine Frequenz der Nutz-komponente zu ermitteln; und/oder

- wobei die Umformer-Elektronik eingerichtet ist, anhand einer, insb. nämlich aus der Nutzsignalfolge ( $\hat{s}_{D2}$ ) gewonnenen, Frequenz der Nutzkomponente eine Strömungsgeschwindigkeit und/oder eine Volumendurchflußrate des Fluids (FL) zu ermitteln; und/oder
- wobei die Umformer-Elektronik einen, insb. nicht-flüchtigen, Speicher (EEPROM) aufweist, der dafür eingerichtet ist, zumindest die Filterkoeffizienten $w_k$ des Nutzfilterkoeffizienten-Satzes W, insb. persistent, zu speichern.

3. Meßsystem nach einem der vorherigen Ansprüche, wobei die Umformer-Elektronik eingerichtet ist, den Nutzfilterkoeffizienten-Satz (W) für das Nutzsignalfilter (FIR-N) aus dem Transversalfilterkoeffizienten-Satz (W1) des Transversalfilters (FIR-A) zu ermitteln, insb. nämlich den Transversalfilterkoeffizienten-Satz (W1) in den Nutzfilterkoeffizienten-Satze (W) zu übernehmen.

4. Meßsystem nach einem der vorherigen Ansprüche, wobei das digitale adaptive Filter (LPE) eingerichtet ist, aus der ersten Sensorsignal-Abtastfolge ($s_{D1}$) eine Schätzsignalfolge ( $\hat{s}_{D1}$ ), nämlich einer Sequenz von, insb. mittels eines digitalen Transversalfilters (FIR-A), aus der ersten Sensorsignal-Abtastfolge ($s_{D1}$) berechneten digitalen Funk-tionswerten $\hat{s}_{D1}[m]$ , insb. $\hat{s}_{D1}[m] = \sum\limits_{k=1}^{M} w1_k \cdot s_{D1}[m-k]$ , zu generieren, insb. derart, daß die Schätzsig-nalfolge ( $\hat{s}_{D1}$ ) zumindest zeitweise gleich oder zumindest näherungsweise gleich der Sensorsignal-Abtastfolge ($s_{D1}$) ist bzw. einen minimalen quadratischen Fehler (*BLUP - Best Linear Unbiased Prediction*) zur Sensorsignal-Abtastfolge ($s_{D1}$) aufweist.

5. Meßsystem nach einem der vorherigen Ansprüche,

- wobei der zweite Teilbereich bzw. das damit gebildete Strömungshindernis eingerichtet ist, eine Strömungsgeschwindigkeit eines vorbei- und/oder hindurchströmenden Fluids zu erhöhen und/oder einen in einem vorbei- und/oder hindurchströmenden Fluids herrschenden statischen Druck zu verringern und/oder entlang einer mittels der ersten, zweiten und dritten Teilbereiche gebildeten Meßstrecke eine von einem Volumendurchfluß abhängigen Druckdifferenz zu provozieren; und/oder
- wobei der zweite Teilbereich bzw. das damit gebildete Strömungshindernis dafür eingerichtet ist, im daran vorbeiströmenden Fluid Wirbel zu induzieren, insb. derart, daß im stromabwärts des Strömungshindernisses strömenden Fluid eine *Kármánsche* Wirbelstraße ausgebildet wird; und/oder
- wobei das Strömungshindernis mittels einer Blende, insb. nämlich als eine Normblende, gebildet ist; und/oder

- wobei das Strömungshindernis mittels eines, insb. prismatisch geformten, Staukörpers gebildet ist; und/oder
- wobei das Strömungshindernis mittels einer, insb. überkritischen, Düse gebildet ist.

6. Meßsystem nach einem der vorherigen Ansprüche,

- wobei die erste Sensoranordnung mittels eines, insb. lediglich, am ersten Teilbereich positionierten, insb. kapazitiven, Drucksensors gebildet ist; und/oder
- wobei die zweite Sensoranordnung mittels eines zumindest teilweise am dritten Teilbereich positionierten, insb. kapazitiven, Drucksensors gebildet ist; und/oder
- wobei die erste Sensoranordnung mittels eines, insb. lediglich, am ersten Teilbereich positionierten, insb. kapazitiven und/oder induktiven, Mikrofons, insb. einem dynamischen Mikrofon, einem Piezomikrofon oder einem Hochfrequenz-Kondensatormikrofon, gebildet ist; und/oder
- wobei die zweite Sensoranordnung mittels eines zumindest teilweise am dritten Teilbereich positionierten, insb. kapazitiven und/oder induktiven, Mikrofons, insb. einem dynamischen Mikrofon, einem Piezomikrofon oder einem Hochfrequenz-Kondensatormikrofon, gebildet ist; und/oder
- wobei die zweite Sensoranordnung mittels eines in den dritten Teilbereich hineinragenden Sensorpaddels gebildet ist; und/oder
- wobei die erste Sensoranordnung mittels zweier jeweils, insb. lediglich, am ersten Teilbereich positionierten Ultraschallwandler gebildet ist; und/oder
- wobei die zweite Sensoranordnung mittels zweier jeweils zumindest teilwiese am dritten Teilbereich positionierten Ultraschallwandler gebildet ist; und/oder
- wobei die Umformer-Elektronik sowohl mit der ersten Sensoranordnung (210) als auch mit der zweiten Sensoranordnung (220) elektrisch verbunden ist; und/oder
- wobei der zweite Teilbereich einen, insb. prismatisch geformten, Staukörper aufweist; und/oder
- wobei der zweite Teilbereich eine Blende, insb. eine Normblende, aufweist; und/oder
- wobei zumindest der zweite Teilbereich mittels eines, insb. zwei oder mehr Rohre und/oder eine Leitungsverzweigung und/oder eine Leitungsvereinigung umfassenden, vibronischen Meßwandlers gebildet ist; und/oder
- wobei ein kleinster Abstand zwischen dem ersten und dritten Teilbereich mehr als ein 3-faches eines kleinsten Kalibers der Rohranordnung beträgt; und/oder
- wobei ein kleinster Abstand zwischen dem ersten und dritten Teilbereich weniger als ein 10-faches eines größten Kalibers der Rohranordnung beträgt.

7. Verfahren zum Messen wenigstens einer zeitlich veränderlichen Meßgröße (x), insb. einer Strömungsgeschwindigkeit, einer Volumendurchflußrate, eines Drucks oder einer Dichte, eines entlang eines, insb. mittels einer Rohrleitung oder innerhalb eines Lumens eines Rohrs eines Meßwandlers gebildeten, Strömungspfades mit einer vorgegebenen Strömungsrichtung strömenden Fluids (FL), wobei der Strömungspfad einen ersten Teilbereich, einen in Strömungsrichtung stromabwärts des ersten Teilbereichs verorteten zweiten Teilbereich sowie einen in Strömungsrichtung stromabwärts des zweiten Teilbereichs verorteten dritten Teilbereich aufweist, und wobei innerhalb des zweiten Teilbereichs ein Strömungshindernis zum Bewirken einer - insb. von der wenigstens einen Meßgröße abhängigen und/oder als ein von der wenigstens einen Meßgröße abhängiger Meßeffekt dienlichen und/oder erwünschten - Störung (d) im strömenden Fluid ausgebildet ist, welches Verfahren umfaßt:

- Strömenlassen von Fluid entlang des Strömungspfades, derart, daß aufeinanderfolgende Teilvolumen des Fluids jeweils zunächst zum ersten Teilbereich, weiter zum zweiten Teilbereich und weiter zum dritten Teilbereich strömt und daß mittels des innerhalb des zweiten Teilbereichs ausgebildeten Strömungshindernisses eine - insb. von der wenigstens einen Meßgröße abhängige und/oder als ein von der wenigstens einen Meßgröße (x) abhängiger Meßeffekt dienliche - Störung (d) im strömenden Fluid (FL → FL*) bewirkt wird;
- Erzeugen wenigstens eines ersten Sensorsignals (s1), das ein vom innerhalb des ersten Teilbereichs strömenden Fluid beeinflußtes erstes Frequenzspektrum aufweist;
- Wandeln des ersten Sensorsignal (s1) in eine nämliches Sensorsignal (s1) approximierende erste Sensorsignal-Abtastfolge ($s_{D1}$), nämlich eine Sequenz von zu verschieden, insb. zeitlich äquidistanten, Abtastzeitpunkten tm = m · $T_{s1}$, mithin mit einer, insb. konstanten, Abtastrate $f_{s1}$ = 1 / ($t_{m+1}$ - $t_m$) = 1 / $T_{s1}$ aus dem ersten Sensorsignal (s1) gewonnenen digitalen Abtastwerten $S_{D1}[m]$ = $S_{D1}[t_m \cdot f_{s1}]$;
- Erzeugen wenigstens eines zweiten Sensorsignals (s2), das ein vom innerhalb des zweiten Teilbereichs und/oder innerhalb des dritten Teilbereichs strömenden Fluid beeinflußtes, insb. nämlich vom ersten Frequenzspektrum abweichendes und/oder wenigstens eine Nutzkomponente, nämlich eine hinsichtlich wenigstens eines Signalparameters von der wenigstens einen Meßgröße (x) bzw. der Störung (d) beeinflußte spektrale Signalkomponente enthaltendes, zweites Frequenzspektrum aufweist;

- Wandeln des zweiten Sensorsignals (s2) in eine nämliches Sensorsignal (s2) approximierende zweite Sensorsignal-Abtastfolge ($s_{D2}$), nämlich einer Sequenz von zu verschieden, insb. zeitlich äquidistanten, Abtastzeitpunkten $t_n = n \cdot T_{s2}$, mithin mit einer, insb. konstanten, Abtastrate $f_{s2} = 1 / (t_{n+1} - t_n) = 1 / T_{s2}$ aus dem zweiten Sensorsignal (s2) gewonnenen digitalen Abtastwerten $S_{D2}[n-] = S_{D2}[t_n \cdot f_{s2}]$, insb. derart, daß die zweite Sensorsignal-Abtastfolge ($s_{D2}$) wenigstens eine Nutzkomponente, nämlich eine von der wenigstens einen Meßgröße (x) beeinflußte spektrale Signalkomponente des zweiten Sensorsignals (s2) approximiert;

- Verwenden der ersten Sensorsignal-Abtastfolge ($s_{D1}$) und eines digitalen adaptiven Filters (LPE), insb. nämlich eines linearen Vorhersagefilters (linear *prediction filter*), zum Ermitteln wenigstens eines Nutzfilterkoeffizienten-Satzes (W), nämlich eines Satzes von N, insb. nämlich wenigstens fünf (N $\geq$ 5) und/oder zumindest teilweise voneinander abweichenden, Filterkoeffizienten $w_k$ aus der ersten Sensorsignal-Abtastfolge ($s_{D1}$);

- Verwenden des Nutzfilterkoeffizienten-Satzes (W) zum Bilden einer z-Übertragungsfunktion $G^*_{FIR}(z)$, insb.

$$G^*_{FIR}(z) = Z(g[n]) = \sum_{k=0}^{N-1} w_k \cdot z^{-k} = \sum_{k=0}^{N-1} w_k \cdot e^{-j\omega T_{s2}}$$

nämlich , eines Nutzsignalfilters (FIR-N), nämlich eines dem Filtern der zweiten Sensorsignal-Abtastfolge ($s_{D2}$) dienlichen digitalen Filters, derart, daß die z-Übertragungsfunktion $G^*_{FIR}(z)$ des Nutzsignalfilters (FIR-N) durch nämlichen Nutzfilterkoeffizienten-Satz (W) bestimmt ist;

- Verwenden der zweiten Sensorsignal-Abtastfolge ($s_{D2}$) und des Nutzsignalfilters (FIR-N) zum Erzeugen einer Nutzsignalfolge ($\hat{s}_{D2}$), nämlich einer Sequenz von mittels des Nutzsignalfilters (FIR-N) aus der zweiten

$$\hat{s}_{D2}[n] = \sum_{k=0}^{N-1} w_k \cdot S_{D2}[n-k]$$

Sensorsignal-Abtastfolge ($s_{D2}$) berechneten digitalen Funktionswerten ; sowie

- Erzeugen einer Meßwertefolge ($x_M$), nämlich einer Sequenz von die wenigstens eine Meßgröße zeitlich aufeinanderfolgend repräsentierenden digitalen Meßwerten ($X_M$), aus der Nutzsignalfolge ($\hat{s}_{D2}$).

8. Verfahren nach dem vorherigen Anspruch,

- wobei die Filterkoeffizienten $w_k$ des Nutzfilterkoeffizienten-Satzes (W) mittels eines LMS-Algorithmus *(Least-Mean-Squares-Algorithmus)* und/oder mittels eines RMS-Algorithmus *(Recursive-Least-Squares-Algorithmus)* ermittelt werden; und/oder wobei wenigstens zwei der Filterkoeffizienten $w_k$ des Nutzfilterkoeffizienten-Satzes W voneinander abweichen; und/oder

- wobei der Nutzfilterkoeffizienten-Satz (W) bzw. das damit gebildete Nutzsignalfilter (FIR-N) fünf oder mehr (N $\geq$ 5), insb. mehr als 10 (N > 10), Filterkoeffizienten $w_k$ enthält; und/oder

- wobei die Abtastrate der ersten Sensorsignal-Abtastfolge ($s_{D1}$) und die Abtastrate der zweiten Sensorsignal-Abtastfolge ($s_{D2}$) gleich groß sind.

9. Verfahren nach einem der Ansprüche 7 bis 8, weiters umfassend: ein, insb. wiederkehrendes und/oder zyklisches, Ersetzen eines die z-Übertragungsfunktion $G^*_{FIR}(z)$ des Nutzsignalfilters (FIR-N) zunächst bestimmenden, insb. aus der ersten Sensorsignal-Abtastfolge ($s_{D1}$) zuvor ermittelten und/oder vom Nutzfilterkoeffizienten-Satz (W) abweichenden, Nutzfilterkoeffizienten-Satzes (W*) durch den Nutzfilterkoeffizienten-Satz (W).

10. Verfahren nach dem vorherigen Anspruch, wobei nämliches Ersetzen des die z-Übertragungsfunktion $G^*_{FIR}(z)$ des Nutzsignalfilters (FIR-N) zunächst bestimmenden Nutzfilterkoeffizienten-Satzes (W*) durch den Nutzfilterkoeffizienten-Satz (W) zyklisch mit einer Austauschrate wiederholt wird, insb. derart, daß nämliche Austauschrate niedriger ist als die Abtastrate der ersten Sensorsignal-Abtastfolge ($s_{D1}$) und/oder niedriger ist als die Abtastrate der zweiten Sensorsignal-Abtastfolge ($s_{D2}$).

11. Verfahren nach einem der Ansprüche 7 bis 10, wobei das digitale adaptive Filter (LPE) ein Transversalfilter (FIR-A), nämlich ein digitales Filter mit einer durch einen Transversalfilterkoeffizienten-Satz (W1), nämlich einen Satz

von M Filterkoeffizienten $w1_k \leftarrow w1_k[m]$ bestimmten z-Übertragungsfunktion $G^*_{LPE}(z)$ , insb. nämlich

$$G^*_{LPE}(z) = Z(g[m]) = \sum_{k=1}^{M} w1_k \cdot z^{-k} \qquad G^*_{LPE}(z) = Z(g[m]) = \sum_{k=1}^{M} w1_k \cdot z^{-k} = \sum_{k=1}^{M} w1_k \cdot e^{-j\omega T_{s1}},$$

oder

umfaßt.

12. Verfahren nach dem vorherigen Anspruch, weiters umfassend: Ermitteln des Nutzfilterkoeffizienten-Satzes (W) für das Nutzsignalfilter (FIR-N) aus dem Transversalfilterkoeffizienten-Satz (W1) des Transversalfilter (FIR-A), insb. derart, daß der Nutzfilterkoeffizienten-Satz (W) die M Filterkoeffizienten $w1_k$ des Transversalfilterkoeffizienten-Satzes (W1) enthält.

13. Verfahren nach einem der Ansprüche 11 bis 12, weiters umfassend: Verwenden des Transversalfilters (FIR-A) sowie der ersten Sensorsignal-Abtastfolge ($s_{D1}$) zum Erzeugen einer Schätzsignalfolge ( $\hat{s}_{D1}$ ), nämlich einer Sequenz von mittels des digitalen Transversalfilters (FIR-A) aus der ersten Sensorsignal-Abtastfolge ($s1_D$) berechneten digitalen Funktionswerten $\hat{S}_{D1}[m]$ , insb.

$$\hat{S}_{D1}[m] = \sum_{k=1}^{M} w1_k \cdot S_{D1}[m-k] .$$

14. Verfahren nach Anspruch 13, weiters umfassend:

- Ermitteln des wenigstens Transversalfilterkoeffizienten-Satzes (W1) von die z-Übertragungsfunktion $G^*_{LPE}(z)$ des digitalen Transversalfilters (FIR-A) bestimmenden Filterkoeffizienten $w1_k \leftarrow w1_k[n]$, derart, daß die Schätzsignalfolge ( $\hat{s}_{D1}$ ) die erste Sensorsignal-Abtastfolge ($s_{D1}$) approximiert bzw. prognostiziert, insb. nämlich gleich oder zumindest näherungsweise gleich der ersten Sensorsignal-Abtastfolge ($s_{D1}$) ist, insb. nämlich einen minimalen quadratischen Fehler *(BLUP - Best Linear Unbiased Prediction)* zur ersten Sensorsignal-Abtastfolge ($s_{D1}$) aufweist; und/oder

- Ermitteln des Nutzfilterkoeffizienten-Satzes (W) für das Nutzsignalfilter (FIR-N) aus dem Transversalfilterkoeffizienten-Satz (W1) des Transversalfilter (FIR-A), falls die Schätzsignalfolge ( $\hat{s}_{D1}$ ) für ein vorgegebenes Abtast- bzw. Zeitintervall gleich oder zumindest näherungsweise gleich der ersten Sensorsignal-Abtastfolge ($s_{D1}$) ist, insb. nämlich einen minimalen quadratischen Fehler *(BLUP - Best Linear Unbiased Prediction)* zur ersten Sensorsignal-Abtastfolge ($s_{D1}$) aufweist.

15. Verfahren nach einem der Ansprüche 13 bis 14, weiters umfassend: Erzeugen einer Schätzfehlerfolge ( $err_D$), nämlich einer Sequenz von jeweils eine Abweichung zwischen einem Abtastwert $S_{D1}[m]$ der ersten Sensorsignal-Abtastfolge ($s_{D1}$) und einem nämlichen Abtastwert $S_{D1}[m]$ approximierenden Funktionswert $\hat{S}_{D1}[m]$ der Schätzsignalfolge ( $\hat{s}_{D1}$ ) repräsentierenden digitalen Funktionswerten $Err_D[m] = f\left(S_{D1}[m], \hat{S}_{D1}[m]\right)$ , insb. nämlich von jeweils eine Differenz zwischen einem Abtastwert $S_{D1}[m]$ der ersten Sensorsignal-Abtastfolge ($s_{D1}$) und einem Funktionswert $\hat{S}_{D1}[m]$ der Schätzsignalfolge $\left(\hat{s}_{D1}\right)$ repräsentierenden digitalen Funktionswerten $Err_D[m] = S_{D1}[m] - \hat{S}_{D1}[m]$ .

16. Verfahren nach Anspruch 15, weiters umfassend: Verwenden einer durch die z-Übertragungsfunktion $G^*_{PE}(z)$ des digitalen Transversalfilters (FIR-A), mithin den Transversalfilterkoeffizienten-Satz (W1) bestimmten Schätzfehlerfunktion $E^*(z) = 1 - G^*_{LPE}(z) = 1 - \sum_{k=1}^{M} w1_k \cdot z^{-k}$ zum Erzeugen der Schätzfehlerfolge ($err_D$) aus der ersten Sensorsignal-Abtastfolge ($S_{D1}$), insb. derart, daß die aus der ersten Sensorsignal-Abtastfolge ($u_{D1}$) berechneten digitalen Funktionswerte Err$_D$[m] der Schätzfehlerfolge (err$_D$) der Funktion

$$\mathrm{Err}_D[m] = S_{D1}[m] - \sum_{k=1}^{M} w1_k \cdot S_{D1}[m-k]$$ entsprechen.

**17.** Verfahren nach einem der Ansprüche 11 bis 16,

- wobei der Nutzfilterkoeffizienten-Satz (W) sämtliche M Filterkoeffizienten $w1_k$ des Transversalfilterkoeffizienten-Satzes (W1) enthält, insb. derart daß jeder Filterkoeffizient $w_{1k}$ des Transversalfilterkoeffizienten-Satzes (W1) als Filterkoeffizient $w_k$ des Nutzfilterkoeffizienten-Satzes (W) übernommen wird ($w1_k \rightarrow w_k$) und/oder daß für jeden Filterkoeffizient $w1_k$ des Transversalfilterkoeffizienten-Satzes (W1) $w1_k = w_k$ gilt; und/oder
- wobei der Nutzfilterkoeffizienten-Satz W bzw. das damit gebildete Nutzsignalfilter (FIR-N) einen von Null verschiedenen, insb. negativen und/oder vorgegebenen, Filterkoeffizienten $w1_0$, insb. nämlich $w1_0 = -1$, enthält, den der Transversalfilterkoeffizienten-Satz W1 bzw. das damit gebildete Transversalfilter (FIR-A) nicht enthält; und/oder
- -wobei der Transversalfilterkoeffizienten-Satz W1 bzw. das damit gebildete Transversalfilter (FIR-A) fünf oder mehr, insb. mehr als 10 (M > 10), Filterkoeffizienten $w1_k$ enthält; und/oder wobei die Filterkoeffizienten $w1_k$ des Transversalfilterkoeffizienten-Satzes W1 mittels eines LMS-Algorithmus *(Least-Mean-Squares-Algorithmus)* und/oder mittels eines RMS-Algorithmus *(Recursive-Least-Squares-Algorithmus)* ermittelt werden; und/oder
- wobei das zweite Sensorsignal (s2) wenigstens eine Nutzkomponente ($s_N$), nämlich eine hinsichtlich wenigstens eines Signalparameters, insb. einer Amplitude, einer Frequenz oder eines Phasenwinkels, von der wenigstens einen Meßgröße (x) beeinflußte spektrale Signalkomponente enthält, insb. derart, daß die zweite Sensorsignal-Abtastfolge ($s_{D2}$) bzw. die Nutzsignalfolge ( $\widehat{s}_{D2}$ ) die wenigstens eine Nutzkomponente enthält bzw. approximiert.

**18.** Verfahren nach einem der Ansprüche 7 bis 17, weiters umfassend:

- Verwenden einer, insb. zumindest teilweise am ersten Teilbereich und/oder zumindest teilweise innerhalb des ersten Teilbereichs angeordneten, ersten Sensoranordnung zum Erzeugen des ersten Sensorsignals (s1); sowie
- Verwenden einer, insb. zumindest teilweise am dritten Teilbereich und/oder zumindest teilweise innerhalb des dritten Teilbereichs angeordneten und/oder zur ersten Sensoranordnung baugleichen, zweiten Sensoranordnung zweiten Erzeugen des zweiten Sensorsignals (s2).

**19.** Verfahren nach einem der Ansprüche 7 bis 18, wobei das Bewirken der Störung im durch den zweiten Teilbereich strömenden Fluid umfaßt:

- Erhöhen einer Strömungsgeschwindigkeit des innerhalb des zweiten Teilbereichs strömenden Fluid; und/oder
- Verringern eines im innerhalb des zweiten Teilbereichs strömenden Fluids herrschenden statischen Drucks; und/oder
- Provozieren eines von einem Volumendurchfluß abhängigen Druckgradienten innerhalb des entlang des Strömungspfades strömenden Fluid; und/oder
- Induzieren von Wirbeln im innerhalb des zweiten Teilbereichs strömenden Fluids, insb. nämlich Ausbilden einer *Kármánsche* Wirbelstraße im stromabwärts des Strömungshindernisses strömenden Fluid.

**20.** Verfahren nach einem der Ansprüche 7 bis 19,

- wobei die erste Sensoranordnung mittels eines am ersten Teilbereich positionierten Drucksensors gebildet ist; und/oder
- wobei die zweite Sensoranordnung mittels eines am zweiten und/oder dritten Teilbereich positionierten Drucksensors gebildet ist; und/oder
- wobei die zweite Sensoranordnung mittels eines in den dritten Teilbereich hineinragenden Sensorpaddels gebildet ist; und/oder
- wobei die erste Sensoranordnung mittels wenigstens eines am ersten Teilbereich positionierten Schallwandlers, insb. eines Ultraschallwandlers, gebildet ist; und/oder
- wobei die zweite Sensoranordnung mittels wenigstens eines am zweiten und/oder dritten Teilbereich positionierten Schallwandlers, insb. eines Ultraschallwandlers, gebildet ist; und/oder
- wobei der zweite Teilbereich einen Staukörper aufweist; und/oder
- wobei der zweite Teilbereich eine Blende, insb. eine Normblende, aufweist; und/oder
- wobei der zweite Teilbereich mittels einer, insb. zwei oder mehr Rohre und/oder eine Leitungsverzweigung und/oder eine Leitungsvereinigung umfassenden, Rohranordnung eines vibronischen Meßwandlers gebildet ist.

## Claims

1. Measuring system designed to measure at least a measured variable (x) that varies over time, particularly a flow velocity, a volume flow rate, a pressure, a pressure difference or a density, of a fluid (FL) flowing along a flow path with a predefined flow direction, wherein said measuring system comprises:

- a tube arrangement (100) that can particularly be inserted in the course of a pipe and/or designed as an integral part of a pipe,

-- with an interior channel forming a first subsection (100-1) of the flow path, a second subsection (100-2) of the flow path situated downstream from the first subsection in the flow direction and a third subsection (100-3) of the flow path situated downstream from the second subsection in the flow direction,
-- with a tube wall (110), particularly metal and/or monolithic, enveloping said interior channel (100*)

- and with a flow obstacle (120) arranged in the second subsection of the flow path inside the tube arrangement, particularly connected in a fixed manner to an interior side of the tube wall facing towards the interior channel (100*), wherein said obstacle is designed to cause a disturbance (d) in the flowing fluid - wherein said disturbance depends particularly on the at least one measured variable and/or serves as a measuring effect that depends on the at least one measured variable;
- a first sensor arrangement (210), particularly located at least partially on the first subsection and/or at least partially inside the first subsection, wherein said arrangement is designed to generate at least a first sensor signal (s1) which has a first frequency spectrum that is influenced by the fluid flowing inside the first subsection;
- a second sensor arrangement (220), particularly at least partially arranged on the third subsection and/or at least partially inside the third subsection and/or identical in design to the first sensor arrangement, wherein said second arrangement is designed to generate at least a second sensor signal (s2) that has a second frequency spectrum that is influenced by the fluid flowing inside the third subsection - wherein said second spectrum is particularly different from the first frequency spectrum and/or contains at least one useful component, specifically a spectral signal component influenced by the at least one measured variable (x) with regard to at least one signal parameter;
- as well as a transmitter electronics unit (20) particularly formed by at least one microprocessor ($\mu$C);
- wherein the transmitter electronics unit (20) is designed to

-- receive the first sensor signal (s1) and to convert it to a first sensor signal scan sequence ($s_{D1}$) that approximates said sensor signal (s1), specifically a sequence of digital scan values $S_{D1}[m] = S_{D1}[t_m \cdot f_{s1}]$ obtained from the first sensor signal (s1) at different scan times $t_n = n \cdot T_{s1}$, particularly equidistant in time, with a scan rate $f_{s1} = 1 / (t_{m+1} - t_m) = 1 / T_{s1}$, particularly constant,
-- and to receive the second sensor signal (s2) and to convert it to a second sensor signal scan sequence ($s_{D2}$) that approximates said sensor signal (s2), specifically a sequence of digital scan values $S_{D2}[n] = S_{D2}[t_n \cdot f_{s2}]$ obtained from the second sensor signal (s2) at different scan times $t_n = n \cdot T_{s2}$, particularly equidistant in time, with a scan rate $f_{s2} = 1 / (t_{n+1} - t_n) = 1 / Ts_2$, particularly constant, particularly in such a way that the second sensor signal scan sequence ($s_{D2}$) approximates at least one useful component, specifically a spectral signal component of the second sensor signal (s2) influenced by the at least one measured variable (x);

- wherein the transmitter electronics unit is designed to

-- determine, using a digital adaptive filter (LPE), a useful filter coefficient set (W), from the first sensor signal scan sequence ($s_{D1}$), specifically a set of N, particularly N $\geq$ 5, filter coefficients $w_k$
-- and to form, using said useful filter coefficient set (W), a z transmission function $G_{FIR}(z)$, particularly

$$G_{FIR}^{*}(z) = Z(g[n]) = \sum_{k=0}^{N-1} w_k \cdot z^{-k} = \sum_{k=0}^{N-1} w_k \cdot e^{-j\omega T_{s2}}$$

, of a useful signal filter (FIR-N), specifically a digital filter serving to filter the second sensor signal scan sequence ($s_{D2}$), in such a way that the z transmission function $G_{FIR}(z)$ of the useful signal filter (FIR-N) is determined by said useful filter coefficient set (W);

- and wherein the transmitter electronics unit is designed to

-- generate, using said useful signal filter (FIR-N) and using the second sensor signal scan sequence ($s_{D2}$),

a useful signal sequence ($\hat{s}_{D2}$), specifically a sequence of digital function values $\hat{s}_{D2}[n] = \sum_{k=0}^{N-1} w_k \cdot s_{D2}[n-k]$ calculated from the second sensor signal scan sequence ($s_{D2}$) using the useful signal filter (FIR-N)

-- and to generate, from the useful signal sequence ($\hat{s}_{D2}$), a measured value sequence ($x_M$), specifically a sequence of digital measured values ($X_M$) that represent in chronological succession the at least one measured variable.

2. Measuring system as claimed in one of the previous claims,

- wherein the transmitter electronics unit is designed to determine the filter coefficients $w_k$ of the useful filter coefficient set W using an LMS algorithm (Least-*Mean-Squares-Algorithm*) and/or using an RMS algorithm (*Recursive-Least-Squares-Algorithm*); and/or
- wherein the transmitter electronics unit is designed to calculate, particularly in a recurrent manner, a transversal filter coefficient set (W1), specifically a set of M filter coefficients $w1_k \leftarrow w1_k[n]$ determining a z transmission function $G^{*}_{LPE}(z)$, particularly $G_{LPE}^{*}(z) = Z(g[m]) = \sum_{k=1}^{M} w1_k \cdot z^{-k}$ or

$$G_{LPE}^{*}(z) = Z(g[m]) = \sum_{k=1}^{M} w1_k \cdot z^{-k} = \sum_{k=1}^{M} w1_k \cdot e^{-j\omega T_{s1}}$$

, of a transversal filter (FIR-A) of the digital adaptive filter (LPE); and/or

- wherein the transmitter electronics unit is designed to determine a frequency of the useful component using the useful signal sequence ($\hat{s}_{D2}$); and/or
- wherein the transmitter electronics unit is designed to determine a flow velocity and/or a volume flow rate of the fluid (FL) using a frequency of the useful component, particularly obtained from the useful signal sequence ($\hat{s}_{D2}$); and/or
- wherein the transmitter electronics unit comprises a memory, particularly a nonvolatile memory (EEPROM), wherein said memory is designed to save, particularly in a persistent manner, at least the filter coefficients $w_k$ of the useful filter coefficient set W.

3. Measuring system as claimed in one of the previous claims, wherein the transmitter electronics unit is designed to determine the useful filter coefficient set (W) for the useful signal filter (FIR-N) from the transversal filter coefficient set (W1) of the transversal filter (FIR-A), particularly to apply the transversal filter coefficient set (W1) to the useful filter coefficient set (W).

4. Measuring system as claimed in one of the previous claims, wherein the digital adaptive filter (LPE) is designed to generate, from the first sensor signal scan sequence ($s_{D1}$), a estimation signal sequence ($\hat{s}_{D1}$), specifically a sequence of digital function values $\hat{s}_{D1}[m]$, insb. $\hat{s}_{D1}[m] = \sum_{k=1}^{M} w1_k \cdot s_{D1}[m-k]$ , particularly calculated using a digital transversal filter (FIR-A), from the first sensor signal scan sequence ($s_{D1}$), particularly in such a way that the estimation signal sequence ($\hat{s}_{D1}$) is at least temporarily equal to or at least approximately equal to the sensor signal scan sequence ($s_{D1}$) or has a minimum quadratic error (*BLUP - Best Linear Unbiased Prediction*) in relation to the sensor signal scan sequence ($s_{D1}$).

5. Measuring system as claimed in one of the previous claims,

- wherein the second subsection or the flow obstacle formed therewith is designed to increase a flow velocity of a fluid flowing by and/or through, and/or to reduce a static pressure present in a fluid flowing by and/or through, and/or to provoke a pressure difference dependent on a volume flow rate along a measuring section formed using the first, the second and the third subsection; and/or

- wherein the second subsection or the flow obstacle formed therewith is designed to induce vortices in the fluid flowing by said obstacle, particularly in such a way that a Karman vortex street is formed in the fluid flowing downstream from the flow obstacle; and/or

- wherein the flow obstacle is formed using an orifice plate, particularly a standard orifice plate; and/or

- wherein the flow obstacle is formed using a bluff body, particularly prismatic; and/or

- wherein the flow obstacle is formed using a nozzle, particularly supercritical.

6. Measuring system as claimed in one of the previous claims,

- wherein the first sensor arrangement is formed using a pressure sensor, particularly capacitive, positioned, particularly solely, on the first subsection; and/or

- wherein the second sensor arrangement is formed using a pressure sensor, particularly capacitive, positioned at least partially on the third subsection; and/or

- wherein the first sensor arrangement is formed using a microphone, particularly capacitive and/or inductive, positioned, particularly solely, on the first subsection, particularly a dynamic microphone, a piezoelectric microphone or a high-frequency capacitor microphone; and/or

- wherein the second sensor arrangement is formed using a microphone, particularly capacitive and/or inductive, positioned at least partially on the third subsection, particularly a dynamic microphone, a piezoelectric microphone or a high-frequency capacitor microphone; and/or

- wherein the second sensor arrangement is formed using a sensor paddle projecting into the third subsection; and/or

- wherein the first sensor arrangement is formed using two ultrasonic transducers, each positioned, particularly solely, on the first subsection; and/or

- wherein the second sensor arrangement is formed using two ultrasonic transducers, each positioned at least partially on the third subsection; and/or

- wherein the transmitter electronics unit is connected electrically to both the first sensor arrangement (210) and the second sensor arrangement (220); and/or

- wherein the second subsection comprises a bluff body, particularly prismatic; and/or

- wherein the second subsection comprises an orifice plate, particularly a standardized orifice plate; and/or

- wherein at least the second subsection is formed using a vibronic transducer, wherein said transducer particularly comprises two or more tubes and/or a pipe branch and/or a pipe junction; and/or

- wherein a minimum distance between the first and the third subsection is more than 3 times the smallest caliber of the tube arrangement; and/or

- wherein a minimum distance between the first and the third subsection is less than 10 times the largest caliber of the tube arrangement.

7. Procedure designed to measure at least a measured variable (x) that varies over time, particularly a flow velocity, a volume flow rate, a pressure or a density, of a fluid (FL) flowing with a predefined flow direction along a flow path formed particularly using a pipe or on the interior of an interior channel of a tube of a transducer, wherein the flow path has a first subsection, a second subsection situated downstream from the first subsection in the flow direction, and a third subsection situated downstream from the second subsection in the flow direction, and wherein a flow obstacle is formed inside the second subsection, wherein said obstacle is designed to cause a disturbance (d) - particularly dependent on the at least one measured variable and/or serving as a measuring effect that depends on the at least one measured variable, and/or desired - in the flowing fluid, wherein said procedure comprises the following steps:

- Fluid is allowed to flow along the flow path in such a way that consecutive partial volumes of the flowing fluid flow initially to the first subsection, further to the second subsection and then to the third subsection, and that by means of the flow obstacle formed inside the second subsection, a disturbance (d) - depending particularly on the at least one measured variable and/or serving as a measuring effect that depends on the at least one measured variable (x) - is caused in the flowing fluid (FL → FL*);

- Generation of at least a first sensor signal (s1), which has a first frequency spectrum influenced by the fluid flowing inside the first subsection;

- Conversion of the first sensor signal (s1) to a first sensor signal scan sequence ($s_{D1}$) that approximates said sensor signal (s1), specifically a sequence of digital scan values $S_{D1}[m] = S_{D1}[t_m \cdot f_{s1}]$ obtained from the first sensor signal (s1) at different scan times, particularly equidistant in time, $t_m = m \cdot T_{s1}$, with a, particularly constant, scan rate $f_{s1} = 1 / (t_{m+1} - t_m) = 1 / T_{s1}$;

- Generation of at least a second sensor signal (s2), wherein said signal has a second frequency spectrum influenced by the fluid flowing inside the second subsection and/or inside the third subsection, specifically different to the first frequency spectrum and/or containing at least a useful component, specifically a spectral signal component influenced by the at least one measured variable (x) or the disturbance (d) with regard to at least one signal parameter;

- Conversion of the second sensor signal (s2) to a second sensor signal scan sequence ($s_{D2}$) that approximates said sensor signal (s2), specifically a sequence of digital scan values $S_{D2}[n-] = S_{D2}[t_n \cdot f_{s2})$ obtained from the second sensor signal (s2) at different scan times $t_n = n \cdot T_{s2}$, particularly equidistant in time, with a scan rate $f_{s2} = 1 / (t_{n+1} - t_n) = 1 / Ts_2$, particularly constant, particularly such that the second sensor signal scan sequence ($s_{D2}$) approximates at least a useful component, specifically a spectral signal component of the second sensor signal (s2) influenced by the at least one measured variable (x);

- Use of the first sensor signal scan sequence ($s_{D1}$) and a digital adaptive filter (LPE), particularly a linear prediction filter, to determine at least a useful filter coefficient set (W), particularly a set of N, particularly at least five ($N \geq 5$) filter coefficients and/or filter coefficients $w_k$ that differ at least partially from one another, from the first sensor signal scan sequence ($s_{D1}$);

- Use of the useful filter coefficient set (W) to form a z transmission function $G^*_{FIR}(z)$, particularly specifically

$$G^*_{FIR}(z) = Z(g[n]) = \sum_{k=0}^{N-1} w_k \cdot z^{-k} = \sum_{k=0}^{N-1} w_k \cdot e^{-j\omega T_{s2}}$$

, of a useful signal filter (FIR-N), specifically a digital filter serving to filter the second sensor signal scan sequence ($s_{D2}$), in such a way that the z transmission function $G^*_{FIR}(z)$ of the useful signal filter (FIR-N) is determined by said useful filter coefficient set (W);

- Use of the second sensor signal scan sequence ($s_{D2}$) and the useful signal filter (FIR-N) to generate a useful signal sequence ($\hat{s}_{D2}$), specifically a sequence of digital function values $$\hat{S}_{D2}[n] = \sum_{k=0}^{N-1} w_k \cdot S_{D2}[n-k]$$ calculated using the useful signal filter (FIR-N) from the second sensor signal scan sequence ($s_{D2}$); and

- Generation of a measured value sequence ($x_M$), specifically a sequence of digital measured values ($X_M$) consecutively representing the at least one measured variable over time, from the useful signal sequence ($\hat{s}_{D2}$).

8. Procedure as claimed in the previous claim,

- wherein the filter coefficients $w_k$ of the useful filter coefficient set (W) are determined using an LMS algorithm (*Least-Mean-Squares-Algorithm*) and/or using an RMS algorithm (*Recursive-Least-Squares-Algorithm*); and/or wherein at least two of the filter coefficients $w_k$ of the useful filter coefficient set W differ from one another; and/or
- wherein the useful filter coefficient set (W) or the useful signal filter (FIR-N) formed therewith contain five filter coefficients $w_k$ or more ($N \geq 5$), particularly more than 10 ($N > 10$); and/or
- wherein the scan rate of the first sensor signal scan sequence ($s_{D1}$) and the scan rate of the second sensor signal scan sequence ($s_{D2}$) are of the same size.

9. Procedure as claimed in one of the Claims 7 to 8, further comprising: a replacement, particularly repetitive and/or cyclic, of a useful filter coefficient set (W*) - initially determining the z transmission function $G^*_{FIR}(z)$ of the useful signal filter (FIR-N), particularly determined beforehand from the first sensor signal scan sequence ($s_{D1}$) and/or differing from the useful filter coefficient set (W) - by the useful filter coefficient set (W).

10. Procedure as claimed in the previous claim, wherein the replacement of the useful filter coefficient set (W*) - initially determining the z transmission function $G^*_{FIR}(z)$ of the useful signal filter (FIR-N) - with the useful filter coefficient set (W) is repeated cyclically with a replacement rate, particularly in such a way that said replacement rate is less than the scan rate of the first sensor signal scan sequence ($s_{D1}$) and/or is less than the scan rate of the second sensor signal scan sequence ($s_{D2}$).

11. Procedure as claimed in one of the Claims 7 to 10, wherein the digital adaptive filter (LPE) comprises a transversal filter (FIR-A), specifically a digital filter with a z transmission function $G^*_{LPE}(z)$ determined by a transversal filter coefficient set (W1), specifically a set of M filter coefficients $w1_k \leftarrow w1_k[m]$, particularly

$$G^*_{LPE}(z) = Z(g[m]) = \sum_{k=1}^{M} w1_k \cdot z^{-k} \qquad G^*_{LPE}(z) = Z(g[m]) = \sum_{k=1}^{M} w1_k \cdot z^{-k} = \sum_{k=1}^{M} w1_k \cdot e^{-j\omega T_s 1}$$ .

**12.** Procedure as claimed in the previous claim, further comprising:
determination of the useful filter coefficient set (W) for the useful signal filter (FIR-N) from the transversal filter coefficient set (W1) of the transversal filter (FIR-A), particularly in such a way that the useful filter coefficient set (W) contains the M filter coefficients $w1_k$ of the transversal filter coefficient set (W1).

**13.** Procedure as claimed in one of the Claims 11 to 12, further comprising:
Use of the transversal filter (FIR-A) as well as the first sensor signal scan sequence ($s_{D1}$) to generate an estimation signal sequence ($\hat{s}_{DI}$), specifically a sequence of digital function values $\hat{S}_{D1}[m]$, particularly

$$\hat{S}_{D1}[m] = \sum_{k=1}^{M} w1_k \cdot S_{D1}[m-k]$$ , said functions being calculated using the digital transversal filter (FIR-A) from the first sensor signal scan sequence ($s_{1D}$).

**14.** Procedure as claimed in Claim 13, further comprising the following steps:

- Determination of the transversal filter coefficient set (W1) at least of the filter coefficients $w1_k \leftarrow w1_k[n]$ determining the z transmission function $G^*_{LPE}(z)$ of the digital transversal filter (FIR-A) in such a way that the estimation signal sequence ($\hat{s}_{DI}$) approximates or forecasts the first sensor signal scan sequence ($s_{D1}$), wherein said estimation signal sequence is particularly equal to or at least approximately equal to the first sensor signal scan sequence ($s_{D1}$), particularly having a minimum quadratic error *(BLUP - Best Linear Unbiased Prediction)* in relation to the first sensor signal scan sequence ($s_{D1}$); and/or
- Determination of the useful filter coefficient set (W) for the useful signal filter (FIR-N) from the transversal filter coefficient set (W1) of the transversal filter (FIR-A) in the event that the estimation signal sequence ($\hat{s}_{D1}$) for a predefined scan or time interval is equal to or at least approximately equal to the first sensor signal scan sequence ($s_{D1}$), particularly having a minimum quadratic error (*BLUP - Best Linear Unbiased Prediction*) in relation to the first sensor signal scan sequence ($s_{D1}$).

**15.** Procedure as claimed in one of the Claims 13 to 14, further comprising:
The generation of an estimated error sequence (erro), specifically a sequence of digital function values

$$Err_D[m] = f(S_{D1}[m], \hat{S}_{D1}[m])$$ representing a deviation between a scan value $S_{D1}[m]$ of the first sensor signal scan sequence ($s_{D1}$) and a function value $S_{D1}[m]$ approximating said scan value $S_{D1}[m]$ of the estimation signal sequence ($\hat{s}_{D1}$); specifically digital function values $$Err_D[m] = S_{D1}[m] - \hat{S}_{D1}[m]$$ representing a difference between a scan value $S_{D1}[M]$ of the first sensor signal scan sequence ($s_{D1}$) and a function value $S_{D1}[m]$ of the estimation signal sequence ($\hat{s}_{D1}$).

**16.** Procedure as claimed in Claim 15, further comprising:

The use of an estimation error function $$E^*(z) = 1 - G^*_{LPE}(z) = 1 - \sum_{k=1}^{M} w1_k \cdot z^{-k}$$ determined by the z transmission function $G^*_{PE}(z)$ of the digital filter transversal (FIR-A), and therefore the transversal filter coefficient set (W1), for the purpose of generating the estimated error sequence (erro) from the first sensor signal scan sequence ($s_{D1}$), particularly in such a way that the digital function values Erro [m] calculated from the first sensor signal scan sequence ($u_{D1}$) correspond to the estimated error sequence (erro) of the function $$Err_D[m] = S_{D1}[m] - \sum_{k=1}^{M} w1_k \cdot S_{D1}[m-k]$$ .

**17.** Procedure as claimed in one of the Claims 11 to 16,

- wherein the useful filter coefficient set (W) contains all the M filter coefficients $w1_k$ of the transversal filter coefficient set (W1), particularly in such a way that each filter coefficient $w1_k$ of the transversal filter coefficient set (W1) is accepted as the filter coefficient $w_k$ of the useful filter coefficient set (W) ($w1_k \rightarrow w_k$) and/or that for

each filter coefficient $w1_k$ of the transversal filter coefficient set (W1), the relation $w1_k = w_k$ applies ; and/or
- wherein the useful filter coefficient set W or the useful signal filter (FIR-N) formed therewith contains a filter coefficient $w1_0$ that is different to zero, particularly negative and/or predefined, particularly $w1_0 = -1$, which the transversal filter coefficient set W1 or the transversal filter (FIR-A) formed therewith does not contain; and/or

-- wherein the transversal filter coefficient set W1 or the transversal filter (FIR-A) formed therewith contains five or more, particularly more than 10 (M > 10), filter coefficients $w1_k$; and/or
wherein the filter coefficients $w1_k$ of the transversal filter coefficient set W1 are determined using an LMS algorithm (*Least-Mean-Squares-Algorithm*) and/or using an RMS algorithm (*Recursive-Least-Squares-Algorithm*); and/or

- wherein the second sensor signal (s2) contains at least one useful component ($s_N$), specifically a spectral signal component influenced by the at least one measured variable (x) with regard to at least a signal parameter, particularly an amplitude, a frequency or a phase angle, particularly in such a way that the second sensor signal scan sequence ($s_{D2}$) or the useful signal sequence ($\hat{s}_{D2}$) contains or approximates the at least one useful component.

18. Procedure as claimed in one of the Claims 7 to 17, further comprising:

- Use of a first sensor arrangement arranged particularly at least partially on the first subsection and/or at least partially inside the first subsection, wherein said arrangement is designed to generate the first sensor signal (s1); and
- Use of a second sensor arrangement, arranged particularly at least partially on the third subsection and/or at least partially inside the third subsection and/or identical in design to the first sensor arrangement, wherein the second arrangement is designed to generate the second sensor signal (s2).

19. Procedure as claimed in one of the Claims 7 to 18, wherein the implementation of the disturbance in the fluid flowing through the second subsection comprises:

- The increase in a flow velocity of the fluid flowing inside the second subsection; and/or
- Reduction of a static pressure present in the fluid flowing in the second subsection; and/or
- Implementation of a pressure gradient, which depends on a volume flow, in the fluid flowing along the flow path; and/or
- Induction of vortexes in the fluid flowing inside the second subsection, particularly forming a Karman vortex street in the fluid flowing downstream from the flow obstacle.

20. Procedure as claimed in one of the Claims 7 to 19,

- wherein the first sensor arrangement is formed using a pressure sensor positioned on the first subsection; and/or
- wherein the second sensor arrangement is formed using a pressure sensor positioned on the second and/or the third subsection; and/or
- wherein the second sensor arrangement is formed using a sensor paddle projecting into the third subsection; and/or
- wherein the first sensor arrangement is formed using at least one acoustic transducer, particularly an ultrasonic transducer, positioned on the first subsection; and/or
- wherein the second sensor arrangement is formed using at least one acoustic transducer, particularly an ultrasonic transducer, positioned on the second and/or third subsection; and/or
- wherein the second subsection has a bluff body; and/or
- wherein the second subsection has an orifice plate, particularly a standardized orifice plate; and/or
- wherein the second subsection is formed using a tube arrangement of a vibronic transducer, wherein said arrangement comprises particularly two or more tubes and/or a pipe branch and/or a pipe junction.

## Revendications

1. Système de mesure destiné à la mesure d'au moins une grandeur de mesure (x) variable dans le temps, notamment une vitesse d'écoulement, un débit volumique, une pression, une différence de pression ou une densité, d'un fluide (FL) s'écoulant le long d'un chemin d'écoulement avec un sens d'écoulement prédéfini, lequel système de mesure comprend :

- un agencement de tubes (100) pouvant notamment être inséré dans le tracé d'une conduite et/ou conçu comme partie intégrante d'une conduite,

-- avec un canal intérieur formant une première zone partielle (100-1) du chemin d'écoulement, une deuxième zone partielle (100-2) du chemin d'écoulement située en aval de la première zone partielle dans le sens d'écoulement ainsi qu'une troisième zone partielle (100-3) du chemin d'écoulement située en aval de la deuxième zone partielle dans le sens d'écoulement,
-- avec une paroi de tube (110), notamment métallique et/ou monolithique, enveloppant le dit canal intérieur (100*)

- et avec un obstacle à l'écoulement (120) disposé dans la deuxième zone partielle du chemin d'écoulement à l'intérieur de l'agencement de tubes, lequel obstacle est notamment relié de façon fixe à la paroi de tube sur un côté intérieur de celle-ci tourné vers le canal intérieur (100*), lequel obstacle est destiné à provoquer une perturbation (d) dans le fluide en écoulement - laquelle perturbation est notamment dépendante de l'au moins une grandeur de mesure et/ou servant d'effet de mesure dépendant de l'au moins une grandeur de mesure ;
- un premier agencement de capteurs (210), disposé notamment au moins partiellement sur la première zone partielle et/ou au moins partiellement à l'intérieur de la première zone partielle, lequel agencement est conçu pour générer au moins un premier signal de capteur (s1) qui présente un premier spectre de fréquences influencé par le fluide s'écoulant à l'intérieur de la première zone partielle ;
- un deuxième agencement de capteurs (220), disposé notamment au moins partiellement sur la troisième zone partielle et/ou au moins partiellement à l'intérieur de la troisième zone partielle et/ou de construction identique au premier agencement de capteurs, lequel deuxième agencement est conçu pour générer au moins un deuxième signal de capteur (s2) qui présente un deuxième spectre de fréquence influencé par le fluide s'écoulant à l'intérieur de la troisième zone partielle - lequel deuxième spectre est notamment différent du premier spectre de fréquence et/ou contenant au moins une composante utile, à savoir une composante de signal spectrale influencée par l'au moins une grandeur de mesure (x) en ce qui concerne au moins un paramètre de signal ;
- ainsi qu'une électronique de transmetteur (20) formée notamment au moyen d'au moins un microprocesseur (μC);
- l'électronique de transmetteur (20) étant conçue pour

-- recevoir le premier signal de capteur (s1) et pour le convertir en une première séquence d'échantillonnage de signal de capteur ($s_{D1}$) approximant le même signal de capteur (s1), à savoir une séquence de valeurs d'échantillonnage numériques $S_{D1}[m] = S_{D1}[t_m \cdot f_{s1}]$ obtenue à partir du premier signal de capteur (s1) à des instants d'échantillonnage $t_n = n \cdot T_{s1}$ différents, notamment équidistants dans le temps, avec une fréquence d'échantillonnage $f_{s1} = 1 / (t_{m+1} - t_m) = 1 / T_{s1}$, notamment constante,
-- ainsi que recevoir le deuxième signal de capteur (s2) et pour le convertir en une deuxième séquence d'échantillonnage de signal de capteur ($s_{D2}$) approximant le même signal de capteur (s2), à savoir une séquence de valeurs d'échantillonnage numériques $S_{D2}[n] = S_{D2}[t_n \cdot f_{s2}]$ obtenue à partir du deuxième signal de capteur (s2) à des instants d'échantillonnage $t_n = n \cdot T_{s2}$ différents, notamment équidistants dans le temps, avec une fréquence d'échantillonnage $f_{s2} = 1 / (t_{n+1} - t_n) = 1 / Ts_2$, notamment constante, notamment de telle sorte que la deuxième séquence d'échantillonnage de signal de capteur ($s_{D2}$) approxime au moins une composante utile, à savoir une composante de signal spectrale du deuxième signal de capteur (s2) influencée par l'au moins une grandeur de mesure (x) ;

- l'électronique de transmetteur étant conçue pour

-- déterminer, au moyen d'un filtre adaptatif numérique (LPE), à partir de la première séquence d'échantillonnage de signal de capteur ($s_{D1}$), un jeu de coefficients de filtre utile (W), à savoir un jeu de N, notamment de $N \geq 5$, coefficients de filtre $w_k$
-- ainsi que pour former, au moyen du même jeu de coefficients de filtre utile (W), une fonction de transfert z $G_{FIR}(z)$, notamment $G_{FIR}^{*}(z) = Z(g[n]) = \sum_{k=0}^{N-1} w_k \cdot z^{-k} = \sum_{k=0}^{N-1} w_k \cdot e^{-j\omega T_{s2}}$, d'un filtre de signal utile (FIR-N), à savoir d'un filtre numérique servant à filtrer la deuxième séquence d'échantillonnage de signal de capteur ($s_{D2}$), de telle sorte que la fonction de transfert z $G_{FIR}(z)$ du filtre de signal utile (FIR-N) soit déterminée par le même jeu de coefficients de filtre utile (W) ;

- et l'électronique de transmetteur étant conçue pour

-- générer, au moyen du même filtre de signal utile (FIR-N) ainsi qu'au moyen de la deuxième séquence d'échantillonnage de signal de capteur ($s_{D2}$), une séquence de signaux utiles ($\hat{s}_{D2}$), à savoir une séquence de valeurs de fonction numériques $\hat{s}_{D2}[n] = \sum_{k=0}^{N-1} w_k \cdot s_{D2}[n-k]$ calculées au moyen du filtre de signal utile (FIR-N) à partir de la deuxième séquence d'échantillonnage de signal de capteur ($s_{D2}$)

-- ainsi que pour générer, à partir de la séquence de signaux utiles ($\hat{s}_{D2}$), une séquence de valeurs mesurées ($x_M$), à savoir une séquence de valeurs mesurées numériques ($X_M$) représentant successivement dans le temps l'au moins une grandeur de mesure.

2. Système de mesure selon l'une des revendications précédentes,

- pour lequel l'électronique de transmetteur est conçue pour déterminer les coefficients de filtre $w_k$ du jeu de coefficients de filtre utile W au moyen d'un algorithme LMS (*Least-Mean-Squares-Algorithm*) et/ou au moyen d'un algorithme RMS (*Recursive-Least-Squares-Algorithm*) ; et/ou
- pour lequel l'électronique de transmetteur est conçue pour calculer, notamment de manière récurrente, un jeu de coefficients de filtre transversal (W1), à savoir un jeu de M coefficients de filtre $w1_k \leftarrow w1_k[n]$ déterminant

une fonction de transfert z $G_{LPE}(z)$, notamment $G_{LPE}^{*}(z) = Z(g[m]) = \sum_{k=1}^{M} \overline{w1}_k \cdot z^{-k}$ ou

$G_{LPE}^{*}(z) = Z(g[m]) = \sum_{k=1}^{M} w1_k \cdot z^{-k} = \sum_{k=1}^{M} w1_k \cdot e^{-j\omega T_{s1}}$ , d'un filtre transversal (FIR-A) du filtre adaptatif numérique (LPE) ; et/ou

- pour lequel l'électronique de transmetteur est conçue pour déterminer une fréquence de la composante utile à l'aide de la séquence de signaux utiles ($\hat{s}_{D2}$) ; et/ou
- pour lequel l'électronique de transmetteur est conçue pour déterminer une vitesse d'écoulement et/ou un débit volumique du fluide (FL) à l'aide d'une fréquence de la composante utile, notamment obtenue à partir de la séquence de signaux utiles ($\hat{s}_{D2}$) ; et/ou
- pour lequel l'électronique de transmetteur comprend une mémoire, notamment non volatile (EEPROM), laquelle mémoire est conçue pour mémoriser, notamment de manière persistante, au moins les coefficients de filtre $w_k$ du jeu de coefficients de filtre utile W.

3. Système de mesure selon l'une des revendications précédentes, pour lequel l'électronique de transmetteur est conçue pour déterminer le jeu de coefficients de filtre utile (W) pour le filtre de signal utile (FIR-N) à partir du jeu de coefficients de filtre transversal (W1) du filtre transversal (FIR-A), notamment pour reprendre le jeu de coefficients de filtre transversal (W1) dans le jeu de coefficients de filtre utile (W).

4. Système de mesure selon l'une des revendications précédentes, pour lequel le filtre adaptatif numérique (LPE) est conçu pour générer, à partir de la première séquence d'échantillonnage de signal de capteur ($s_{D1}$), une séquence de signaux d'estimation ($\hat{s}_{D1}$), à savoir une séquence de valeurs de fonction numériques

$\hat{s}_{D1}[m]$, insb. $\hat{s}_{D1}[m] = \sum_{k=1}^{M} w1_k \cdot s_{D1}[m-k]$ , notamment calculées au moyen d'un filtre transversal numérique (FIR-A), à partir de la première séquence d'échantillonnage de signal de capteur ($s_{D1}$), notamment de telle sorte que la séquence de signaux d'estimation ($\hat{s}_{D1}$) soit au moins temporairement égale ou au moins approximativement égale à la séquence d'échantillonnage de signal de capteur ($s_{D1}$) ou présente une erreur quadratique minimale *(BLUP - Best Linear Unbiased Prediction)* par rapport à la séquence d'échantillonnage de signal de capteur ($s_{D1}$).

5. Système de mesure selon l'une des revendications précédentes,

- pour lequel la deuxième zone partielle ou l'obstacle à l'écoulement formé avec celle-ci est conçu pour augmenter une vitesse d'écoulement d'un fluide passant et/ou traversant, et/ou pour diminuer une pression statique régnant dans un fluide passant et/ou traversant, et/ou pour provoquer une différence de pression dépendant d'un débit volumique le long d'un parcours de mesure formé au moyen de la première, de la deuxième et de la troisième zone partielle ; et/ou

- pour lequel la deuxième zone partielle ou l'obstacle à l'écoulement formé avec celle-ci est conçu pour induire des tourbillons dans le fluide s'écoulant le long dudit obstacle, notamment de telle sorte qu'une allée de tourbillons selon Karman soit formée dans le fluide s'écoulant en aval de l'obstacle à l'écoulement ; et/ou
- pour lequel l'obstacle à l'écoulement est formé au moyen d'un diaphragme, notamment d'un diaphragme normalisé ; et/ou
- pour lequel l'obstacle à l'écoulement est formé au moyen d'un corps de retenue, notamment de forme prismatique ; et/ou
- pour lequel l'obstacle à l'écoulement est formé au moyen d'une buse, notamment supercritique.

6. Système de mesure selon l'une des revendications précédentes,

- pour lequel le premier agencement de capteurs est formé au moyen d'un capteur de pression, notamment capacitif, positionné, notamment uniquement, sur la première zone partielle ; et/ou
- pour lequel le deuxième agencement de capteurs est formé au moyen d'un capteur de pression, notamment capacitif, positionné au moins partiellement sur la troisième zone partielle ; et/ou
- pour lequel le premier agencement de capteurs est formé au moyen d'un microphone, notamment capacitif et/ou inductif, positionné, notamment uniquement, sur la première zone partielle, notamment un microphone dynamique, un microphone piézoélectrique ou un microphone à condensateur haute fréquence ; et/ou
- pour lequel le deuxième agencement de capteurs est formé au moyen d'un microphone, notamment capacitif et/ou inductif, positionné au moins partiellement sur la troisième zone partielle, notamment un microphone dynamique, un microphone piézoélectrique ou un microphone à condensateur haute fréquence ; et/ou
- pour lequel le deuxième agencement de capteurs est formé au moyen d'une palette de capteur pénétrant dans la troisième zone partielle ; et/ou
- pour lequel le premier agencement de capteurs est formé au moyen de deux transducteurs à ultrasons positionnés respectivement, notamment uniquement, sur la première zone partielle ; et/ou
- pour lequel le deuxième agencement de capteurs est formé au moyen de deux transducteurs à ultrasons positionnés respectivement au moins partiellement sur la troisième zone partielle ; et/ou
- pour lequel l'électronique de transmetteur est reliée électriquement aussi bien au premier agencement de capteurs (210) qu'au deuxième agencement de capteurs (220) ; et/ou
- pour lequel la deuxième zone partielle comprend un corps de retenue, notamment de forme prismatique ; et/ou
- pour lequel la deuxième zone partielle comprend un diaphragme, notamment un diaphragme normalisé ; et/ou
- pour lequel au moins la deuxième zone partielle est formée au moyen d'un transducteur vibronique, lequel transducteur comprend notamment deux ou plusieurs tubes et/ou une dérivation de conduites et/ou une jonction de conduites ; et/ou
- pour lequel une distance minimale entre la première et la troisième zone partielle est supérieure à 3 fois le plus petit calibre de l'agencement de tubes ; et/ou
- pour lequel une distance minimale entre la première et la troisième zone partielle est inférieure à 10 fois le plus grand calibre de l'agencement de tubes.

7. Procédé destiné à la mesure d'au moins une grandeur de mesure (x) variable dans le temps, notamment une vitesse d'écoulement, un débit volumique, une pression ou une densité, d'un fluide (FL) s'écoulant avec un sens d'écoulement prédéfini le long d'un chemin d'écoulement formé notamment au moyen d'une conduite ou à l'intérieur d'un canal intérieur d'un tube d'un transducteur, le chemin d'écoulement présentant une première zone partielle, une deuxième zone partielle située en aval de la première zone partielle dans le sens de l'écoulement, ainsi qu'une troisième zone partielle située en aval de la deuxième zone partielle dans le sens de l'écoulement, et un obstacle à l'écoulement étant formé à l'intérieur de la deuxième zone partielle, lequel obstacle est destiné à provoquer une perturbation (d) - notamment dépendante de l'au moins une grandeur de mesure et/ou servant d'effet de mesure dépendant de l'au moins une grandeur de mesure et/ou souhaitée - dans le fluide en écoulement, lequel procédé comprend les étapes suivantes :

- Mise en écoulement du fluide le long du chemin d'écoulement, de telle sorte que des volumes partiels successifs du fluide s'écoulent respectivement d'abord vers la première zone partielle, puis vers la deuxième zone partielle et ensuite vers la troisième zone partielle, et en ce qu'au moyen de l'obstacle à l'écoulement formé à l'intérieur de la deuxième zone partielle, une perturbation (d) - dépendant notamment de l'au moins une grandeur de mesure et/ou servant d'effet de mesure dépendant de l'au moins une grandeur de mesure (x) - est provoquée dans le fluide (FL → FL*) en écoulement ;
- Génération d'au moins un premier signal de capteur (s1), lequel signal présente un premier spectre de fréquences influencé par le fluide s'écoulant à l'intérieur de la première zone partielle ;

- Conversion du premier signal de capteur (s1) en une première séquence d'échantillonnage de signal de capteur ($s_{D1}$) approximant le même signal de capteur (s1), à savoir une séquence de valeurs d'échantillons numériques $S_{D1}[m] = S_{D1}[t_m \cdot f_{s1}]$ obtenue à partir du premier signal de capteur (s1) à différents instants d'échantillonnage, notamment équidistants dans le temps, $t_m = m \cdot T_{s1}$, avec une fréquence d'échantillonnage $f_{s1} = 1 / (t_{m+1} - t_m) = 1 / T_{s1}$ ;

- Génération d'au moins un deuxième signal de capteur (s2), lequel signal présente un deuxième spectre de fréquence influencé par le fluide s'écoulant à l'intérieur de la deuxième zone partielle et/ou à l'intérieur de la troisième zone partielle, à savoir différent du premier spectre de fréquence et/ou contenant au moins une composante utile, à savoir une composante de signal spectrale influencée par l'au moins une grandeur de mesure (x) ou la perturbation (d) en ce qui concerne au moins un paramètre de signal ;

- Conversion du deuxième signal de capteur (s2) en une deuxième séquence d'échantillonnage de signal de capteur ($s_{D2}$) approximant le même signal de capteur (s2), à savoir une séquence de valeurs d'échantillonnage numériques $S_{D2}[n-] = S_{D2}[t_n \cdot f_{s2}]$ obtenue à partir du deuxième signal de capteur (s2) à des instants d'échantillonnage $t_n = n \cdot T_{s2}$ différents, notamment équidistants dans le temps, avec une fréquence d'échantillonnage $f_{s2} = 1 / (t_{n+1} - t_n) = 1 / T_{s2}$, notamment constante, notamment de telle sorte la deuxième séquence d'échantillonnage de signal de capteur ($s_{D2}$) approxime au moins une composante utile, à savoir une composante de signal spectrale du deuxième signal de capteur (s2) influencée par l'au moins une grandeur de mesure (x) ;

- Utilisation de la première séquence d'échantillonnage de signal de capteur ($s_{D1}$) et d'un filtre adaptatif numérique (LPE), notamment un filtre de prédiction linéaire (*linear prediction filter*), en vue de déterminer au moins un jeu de coefficients de filtre utile (W), notamment un jeu de N, notamment au moins cinq ($N \geq 5$) et/ou des coefficients de filtre $w_k$ qui diffèrent au moins partiellement les uns des autres, à partir de la première séquence d'échantillonnage de signal de capteur ($s_{D1}$) ;

- Utilisation du jeu de coefficients de filtre utile (W) pour former une fonction de transfert z $G_{FIR}(z)$, notamment

$$G_{FIR}^*(z) = Z(g[n]) = \sum_{k=0}^{N-1} w_k \cdot z^{-k} = \sum_{k=0}^{N-1} w_k \cdot e^{-j\omega T_{s2}}$$

à savoir , d'un filtre de signal utile (FIR-N), à savoir un filtre numérique servant à filtrer la deuxième séquence d'échantillonnage de signal de capteur ($s_{D2}$), de telle sorte que la fonction de transfert z $G_{FIR}(z)$ du filtre de signal utile (FIR-N) soit déterminée par ledit jeu de coefficients de filtre utile (W) ;

- Utilisation de la deuxième séquence d'échantillonnage de signal de capteur ($s_{D2}$) et du filtre de signal utile (FIR-N) en vue de générer une séquence de signaux utiles ($\hat{s}_{D2}$), à savoir une séquence de valeurs de fonction numériques

$$\hat{S}_{D2}[n] = \sum_{k=0}^{N-1} w_k \cdot S_{D2}[n-k]$$

calculées au moyen du filtre de signal utile (FIR-N) à partir de la deuxième séquence d'échantillonnage de signal de capteur ($s_{D2}$) ; ainsi que

- Génération d'une séquence de valeurs mesurées ($x_M$), à savoir d'une séquence de valeurs mesurées numériques ($X_M$) représentant successivement dans le temps l'au moins une grandeur de mesure, à partir de la séquence de signaux utiles ($\hat{s}_{D2}$).

8. Procédé selon la revendication précédente,

- pour lequel les coefficients de filtre $w_k$ du jeu de coefficients de filtre utile (W) sont déterminés au moyen d'un algorithme LMS (*Least-Mean-Squares-Algorithm*) et/ou au moyen d'un algorithme RMS (*Recursive-Least-Squares-Algorithm*) ; et/ou

au moins deux des coefficients de filtre $w_k$ du jeu de coefficients de filtre utile W différant l'un de l'autre ; et/ou

- pour lequel le jeu de coefficients de filtre utile (W) ou le filtre de signal utile (FIR-N) formé avec celui-ci contient cinq coefficients de filtre ou plus ($N \geq 5$), notamment plus de 10 ($N > 10$) ; et/ou

- pour lequel la fréquence d'échantillonnage de la première séquence d'échantillonnage de signal de capteur ($s_{D1}$) et la fréquence d'échantillonnage de la deuxième séquence d'échantillonnage de signal de capteur ($s_{D2}$) sont égales.

9. Procédé selon l'une des revendications 7 à 8, comprenant en outre : un remplacement, notamment répétitif et/ou cyclique, d'un jeu de coefficients de filtre utile (W*) - déterminant initialement la fonction de transfert z $G_{FIR}(z)$ du filtre de signal utile (FIR-N), notamment déterminé au préalable à partir de la première séquence d'échantillonnage de signal de capteur ($s_{D1}$) et/ou différent du jeu de coefficients de filtre utile (W) - par le jeu de coefficients de filtre utile (W).

**10.** Procédé selon la revendication précédente, pour lequel le remplacement du jeu de coefficients de filtre utile (W* ) - déterminant initialement la fonction de transfert z $G_{FIR}(z)$ du filtre de signal utile (FIR-N) - par le jeu de coefficients de filtre utile (W) est répété de manière cyclique avec un taux de remplacement, notamment de telle sorte que ledit taux de remplacement soit inférieur à la fréquence d'échantillonnage de la première séquence d'échantillonnage de signal de capteur ($s_{D1}$) et/ou soit inférieur à la fréquence d'échantillonnage de la deuxième séquence d'échantillonnage de signal de capteur ($s_{D2}$).

**11.** Procédé selon l'une des revendications 7 à 10, pour lequel le filtre adaptatif numérique (LPE) comprend un filtre transversal (FIR-A), à savoir un filtre numérique avec une fonction de transfert z $G_{LPE}$ (z) déterminée par un jeu de coefficients de filtre transversal (W1), à savoir un jeu de M coefficients de filtre $w1_k \leftarrow w1_k[m]$, notamment

$$G^*_{LPE}(z) = Z(g[m]) = \sum_{k=1}^{M} w1_k \cdot z^{-k} \quad \text{ou} \quad G^*_{LPE}(z) = Z(g[m]) = \sum_{k=1}^{M} w1_k \cdot z^{-k} = \sum_{k=1}^{M} w1_k \cdot e^{-j\omega T_{s}1}.$$

**12.** Procédé selon la revendication précédente, comprenant en outre :
la détermination du jeu de coefficients de filtre utile (W) pour le filtre de signal utile (FIR-N) à partir du jeu de coefficients de filtre transversal (W1) du filtre transversal (FIR-A), notamment de telle sorte que le jeu de coefficients de filtre utile (W) contienne les M coefficients de filtre $w1_k$ du jeu de coefficients de filtre transversal (W1).

**13.** Procédé selon l'une des revendications 11 à 12, comprenant en outre :
L'utilisation du filtre transversal (FIR-A) ainsi que de la première séquence d'échantillonnage de signal de capteur ($s_{D1}$) en vue de générer une séquence de signaux d'estimation ($\hat{s}_{DI}$), à savoir une séquence de valeurs de fonction numériques $\hat{S}_{D1}[m]$, notamment $\hat{S}_{D1}[m] = \sum_{k=1}^{M} w1_k \cdot S_{D1}[m-k]$, lesquelles fonctions sont calculées au moyen du filtre transversal numérique (FIR-A) à partir de la première séquence d'échantillonnage de signal de capteur ($s_{1D}$).

**14.** Procédé selon la revendication 13, comprenant en outre les étapes suivantes :

- Détermination du jeu de coefficients de filtre transversal (W1) au moins des coefficients de filtre $w1_k \leftarrow w1_k[n]$ déterminant la fonction de transfert z $G_{LPE}(z)$ du filtre transversal numérique (FIR-A), de telle sorte que la séquence de signaux d'estimation ($\hat{s}_{DI}$) approxime ou atteint la première séquence d'échantillonnage de signal de capteur ($s_{D1}$), laquelle séquence de signaux d'estimation est notamment égale ou au moins approximativement égale à la première séquence d'échantillonnage de signal de capteur ($s_{D1}$), présente notamment une erreur quadratique minimale (*BLUP - Best Linear Unbiased Prediction*) par rapport à la première séquence d'échantillonnage de signal de capteur ($s_{D1}$) ; et/ou
- Détermination du jeu de coefficients de filtre utile (W) pour le filtre de signal utile (FIR-N) à partir du jeu de coefficients de filtre transversal (W1) du filtre transversal (FIR-A) au cas où la séquence de signaux estimée ($\hat{s}_{D1}$) pour un intervalle d'échantillonnage ou de temps prédéfini est égale ou au moins approximativement égale à la première séquence d'échantillonnage de signal de capteur ($s_{D1}$), présente notamment une erreur quadratique minimale (*BLUP-Best Linear Unbiased Prediction*) par rapport à la première séquence d'échantillonnage de signal de capteur ($s_{D1}$).

**15.** Procédé selon l'une des revendications 13 à 14, comprenant en outre :
la génération d'une séquence d'erreurs d'estimation (erro), à savoir une séquence de valeurs de fonction numériques $Err_D[m] = f(S_{D1}[m], \hat{S}_{D1}[m])$ représentant respectivement un écart entre une valeur d'échantillonnage $S_{D1}[m]$ de la première séquence d'échantillonnage de signal de capteur ($s_{D1}$) et une valeur de fonction $\hat{S}_{D1}[m]$ approchant la même valeur d'échantillonnage $S_{D1}[m]$ de la séquence de signaux d'estimation ($\hat{s}_{D1}$) ; à savoir de valeurs de fonction numériques $Err_D[m] = S_{D1}[m] - \hat{S}_{D1}[m]$ représentant respectivement une différence entre une valeur d'échantillonnage $S_{D1}[m]$ de la première séquence d'échantillonnage de signal de capteur ($s_{D1}$) et une valeur de fonction $\hat{S}_{D1}[m]$ de la séquence de signaux d'estimation ($\hat{s}_{D1}$).

**16.** Procédé selon la revendication 15, comprenant en outre :

l'utilisation d'une fonction d'erreur d'estimation $E^*(z) = 1 - G^*_{LPE}(z) = 1 - \sum_{k=1}^{M} w1_k \cdot z^{-k}$ déterminée par la fonction de transfert z $G_{PE}(z)$ du filtre numérique transversal (FIR-A), c'est-à-dire par le jeu de coefficients du filtre transversal (W1), en vue de générer la séquence d'erreurs d'estimation (erro) à partir de la première séquence d'échantillonnage de signal de capteur ($s_{D1}$), notamment de telle sorte que les valeurs de fonction numériques $Err_D[m]$ calculées à partir de la première séquence d'échantillonnage de signal de capteur ($u_{D1}$) correspondent à la séquence d'erreurs d'estimation (erro) de la fonction

$$Err_D[m] = S_{D1}[m] - \sum_{k=1}^{M} w1_k \cdot S_{D1}[m-k]$$

.

**17.** Procédé selon l'une des revendications 11 à 16,

- pour lequel le jeu de coefficients de filtre utile (W) contient tous les M coefficients de filtre $w1_k$ du jeu de coefficients de filtre transversal (W1), notamment de telle sorte que chaque coefficient de filtre $w1_k$ du jeu de coefficients de filtre transversal (W1) est repris comme coefficient de filtre $w_k$ du jeu de coefficients de filtre utile (W) ($w1_k \rightarrow w_k$) et/ou que pour chaque coefficient de filtre $w1_k$ du jeu de coefficients de filtre transversal (W1), la relation $w1_k = w_k$ s'applique ; et/ou
- pour lequel le jeu de coefficients de filtre utile W ou le filtre de signal utile (FIR-N) formé avec celui-ci contient un coefficient de filtre $w1_0$ différent de zéro, notamment négatif et/ou prédéfini, notamment $w1_0 = -1$, que le jeu de coefficients de filtre transversal W1 ou le filtre transversal (FIR-A) formé avec celui-ci ne contient pas ; et/ou

    -- le jeu de coefficients de filtre transversal W1 ou le filtre transversal (FIR-A) formé avec celui-ci contenant cinq ou plus, notamment plus de 10 (M > 10), coefficients de filtre $w1_k$ ; et/ou
    les coefficients de filtre $w1_k$ du jeu de coefficients de filtre transversal W1 étant déterminés au moyen d'un algorithme LMS (*Least-Mean-Squares-Algorithm*) et/ou au moyen d'un algorithme RMS (*Recursive-Least-Squares-Algorithm*) ; et/ou

- pour lequel le deuxième signal de capteur (s2) contient au moins une composante utile ($s_N$), à savoir une composante de signal spectrale influencée par l'au moins une grandeur de mesure (x) en ce qui concerne au moins un paramètre de signal, notamment une amplitude, une fréquence ou un angle de phase, notamment de telle sorte que la deuxième séquence d'échantillonnage de signal de capteur ($s_{D2}$) ou la séquence de signal utile ($\hat{s}_{D2}$) contient ou approxime l'au moins une composante utile.

**18.** Procédé selon l'une des revendications 7 à 17, comprenant en outre :

- Utilisation d'un premier agencement de capteurs disposé notamment au moins partiellement sur la première zone partielle et/ou au moins partiellement à l'intérieur de la première zone partielle, lequel agencement est destiné à générer le premier signal de capteur (s1) ; ainsi que
- Utilisation d'un deuxième agencement de capteurs, disposé notamment au moins partiellement sur la troisième zone partielle et/ou au moins partiellement à l'intérieur de la troisième zone partielle et/ou de construction identique au premier agencement de capteurs, lequel deuxième agencement est destiné à générer le deuxième signal de capteur (s2).

**19.** Procédé selon l'une des revendications 7 à 18, pour lequel la réalisation de la perturbation du fluide s'écoulant à travers la deuxième zone partielle comprend :

- L'augmentation d'une vitesse d'écoulement du fluide s'écoulant à l'intérieur de la deuxième zone partielle ; et/ou
- Réduction de la pression statique régnant dans le fluide s'écoulant dans la deuxième zone partielle ; et/ou
- Réalisation d'un gradient de pression dépendant du débit volumique à l'intérieur du fluide s'écoulant le long du chemin d'écoulement ; et/ou
- Induction de tourbillons dans le fluide s'écoulant à l'intérieur de la deuxième zone partielle, notamment formation d'une allée de tourbillons selon Karman dans le fluide s'écoulant en aval de l'obstacle à l'écoulement.

**20.** Procédé selon l'une des revendications 7 à 19,

- pour lequel le premier agencement de capteurs est formé au moyen d'un capteur de pression positionné sur la première zone partielle ; et/ou
- pour lequel le deuxième agencement de capteurs est formé au moyen d'un capteur de pression positionné sur la deuxième et/ou la troisième zone partielle ; et/ou
- pour lequel le deuxième agencement de capteurs et formé au moyen d'une palette de capteur pénétrant dans la troisième zone partielle ; et/ou

- pour lequel le premier agencement de capteurs est formé au moyen d'au moins un transducteur acoustique, notamment d'un transducteur à ultrasons, positionné sur la première zone partielle ; et/ou
- pour lequel le deuxième agencement de capteurs est formé au moyen d'au moins un transducteur acoustique, notamment un transducteur à ultrasons, positionné sur la deuxième et/ou la troisième zone partielle ; et/ou
- pour lequel la deuxième zone partielle présente un corps de retenue ; et/ou
- pour lequel la deuxième zone partielle présente un diaphragme, notamment un diaphragme normalisé ; et/ou
- pour lequel la deuxième zone partielle est formée au moyen d'un agencement de tubes d'un transducteur vibronique, lequel agencement comprend notamment deux ou plusieurs tubes et/ou une dérivation de conduites et/ou une jonction de conduites.

**FIG. 1**

FIG. 2

Fig. 3

*FIG. 4*

FIG. 5A

FIG. 5B

**FIG. 6A**

**FIG. 6B**

EP 3 788 323 B1

FIG. 7A

FIG. 7B

*FIG. 8*

$FL \rightarrow x$

$s1$

$s_{D1}$

$W [w_0, w_1,...w_N]$

$FL^* \rightarrow x, d(x)$

$s2 \{s_N\}$

$s_{D2}$

$G^*_{FIR}(z)$

$\hat{s}_{D2}\{s_N\}$

$x_M$

**FIG. 9A**

$s_{D1}$

$W [w_0, w_1,...w_N]$

$G^*_{LPE}(z) \rightarrow E^*(z)$

$err_D$

$W1 [w1_1,...w1_N]$

**FIG. 9B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 0682281 A
- US 20070084298 A
- US 20110247423 A
- US 20170328750 A
- WO 0034744 A
- WO 2008061551 A
- WO 2009012230 A
- WO 2009089438 A
- WO 2009158605 A
- WO 2010128289 A
- WO 2012118690 A
- WO 2013174956 A
- WO 2013180843 A

- WO 2014149203 A
- WO 2015049488 A
- WO 2016053492 A
- WO 2017049782 A
- WO 2018016984 A
- WO 9508758 A
- WO 9850761 A
- DE 102017012067
- DE 102017012066
- US 2012192657 A1
- WO 2005033634 A